# EUROPÄISCHE PATENTANMELDUNG

(11) **EP 4 258 512 A2**
(43) Veröffentlichungstag der Anmeldung: **11.10.2023**
(21) Anmeldenummer: 23193965.3
(22) Anmeldetag: 09.07.2015
(51) Int. Cl.: H02J 7/00

(54) **MODULARES ENERGIESPEICHER-DIREKTUMRICHTERSYSTEM**

(30) Priorität: 23.07.2014 DE 102014110410
(62) Teilanmeldung aus: 15736247.6
(71) Anmelder: Universität der Bundeswehr München, 85577 Neubiberg (DE)
(72) Erfinder: HELLING, Florian, 81539 München (DE); WEYH, Thomas, 80637 München (DE)
(74) Vertreter: Lucke, Andreas

(57) **Zusammenfassung**

Gezeigt ist ein modulares Energiespeicher-Direktumrichtersystem (10), das Folgendes umfasst: Eine Steuereinrichtung (20) und mindestens einen Brückenzweig (12), der eine Mehrzahl von hintereinander geschalteten Modulen (14) umfasst, wobei jedes der genannten Module (14) ein Speicherelement für elektrische Energie, insbesondere eine Batterie, oder ein Energieumwandlungselement umfasst. Die genannten Module (14) sind so ausgelegt und ansteuerbar, dass das Speicherelement bzw. Energieumwandlungselement eines Moduls wahlweise deaktiviert werden kann, und dass die Speicherelemente bzw. Energieumwandlungselemente von zwei Modulen, die durch mindestens ein dazwischenliegendes Modul mit deaktiviertem Speicherelement/Energieumwandlungselement getrennt sind, wahlweise parallel und in Reihe schaltbar sind.

## Beschreibung

### GEBIET DER ERFINDUNG

Die vorliegende Erfindung liegt auf dem Gebiet der Elektrotechnik. Insbesondere betrifft sie ein modulares Energiespeicher-Direktumrichtersystem, das mindestens einen Brückenzweig enthält, der eine Mehrzahl von hintereinander geschalteten Modulen umfasst.

### HINTERGRUND DER ERFINDUNG

Batteriesysteme gewinnen zunehmende Bedeutung in zahlreichen Gebieten der Technik. Eine besonders wichtige Anwendung betrifft Elektrofahrzeuge, bei denen die Batteriesysteme eine Schlüsselkomponente für die Mobilität der Zukunft darstellen. Eine weitere Anwendung von außerordentlicher Bedeutung sind Batteriesysteme als stationäre Energiespeicher für regenerative Energien.

Viele der gegenwärtig eingesetzten Energiespeichersysteme bestehen aus einer Reihenschaltung oder einer Parallelschaltung einiger bis hin zu tausenden Energiespeicherelementen, wobei an jedem Energiespeicherelement eine im Vergleich zur benötigten Gesamtspannung relativ kleine Spannung anliegt bzw. angelegt werden kann. Durch eine Reihenschaltung summieren sich dabei die Einzelspannungen zur Gesamtspannung auf. Durch eine Parallelschaltung wird die Ladung aufsummiert. Beispielsweise werden in einem Elektroauto wie etwa dem Tesla-Modell S ca. 6.000 Batteriezellen verbaut. Die Zellspannungen und die elektrischen Eigenschaften der Zellen hängen stark von der verwendeten Zelltechnologie ab. Die Zellspannungen typischer Systeme reichen dabei von 1,0 Volt bis 3,7 Volt.

Durch leicht verschiedene physikalische Eigenschaften der Zellen unterscheiden sich diese hinsichtlich ihrer Kapazitäten und ihres Alterungsverhaltens. Bedingt durch die daraus resultierenden unterschiedlichen Spannungen der einzelnen Zellen ist es in aktuellen Batteriesystemen notwendig, die Ladungen aller Zellen auszubalancieren, um die zu verwendende Gesamtkapazität des Batteriesystems zu erhöhen. Für dieses Ausbalancieren werden gegenwärtig sogenannte Batterie-Management-Systeme (BMS) verwendet, die sich eines aktiven oder passiven Ausbalancierens bedienen. Solche bekannten Batterie-Management-Systeme sind jedoch vergleichsweise aufwendig, verlustbehaftet, meist teuer und unter bestimmten Umständen sogar schädlich für die Zellen.

Um die Energie des Batteriesystems für einen Verbraucher nutzbar zu machen, wird ferner noch ein leistungselektronischer Umrichter benötigt, der zur Stabilisierung der Ausgangsspannung bzw. zur Erzeugung einer gewünschten Phase einer Wechselspannung dient. Darüber hinaus wird zum Laden des Batteriesystems üblicherweise ein weiterer Umrichter, ein sog. Ladeumrichter benötigt.

Der beschriebene Stand der Technik von Batteriesystemen hat eine Reihe von Nachteilen. Ein Nachteil besteht darin, dass die Arbeitspunkte des Systems sich entweder nicht oder nur geringfügig an die aktuellen Erfordernisse anpassen lassen und dass die Gesamtleistung des Systems typischerweise durch die schwächste Subeinheit im Verbund limitiert wird.

Bei BMS, die sich einer passiven Ausbalancierung der Energiespeicherzellen bedienen, wird willentlich Energie verschwendet, indem elektrische Energie in thermische Energie umgewandelt wird und dissipiert. Ferner ist es speziell beim passiven Ausbalancieren so, dass die schwächste Zelle im Verbund die Gesamtkapazität bestimmt, indem sie beispielsweise den Abbruch eines Lade- oder Entladevorgangs erforderlich macht.

BMS mit aktiverer Ausbalancierung basieren in der Regel darauf, dass Energie durch Umladen zwischen den Zellen verschoben wird. Dieses Umladen geht jedoch stets mit einem Energieverlust einher und verringert zudem die Lebensdauer der Zellen.

Ferner ist es bei den herkömmlichen Systemen üblicherweise erforderlich, dass alle Zellen im System vom gleichen Typ sind und möglichst geringe Unterschiede in ihren elektrischen und physikalischen Eigenschaften aufweisen. Zudem wird in aktuellen Systemen typischerweise ein hoher technischer Schaltungs- und Filteraufwand betrieben, der den Energieverbrauch und die Kosten erhöht.

Ähnliche Probleme wie bei Batteriesystemen treten auch bei Energieumwandlungssystemen auf, die als Energieumwandlungselemente beispielsweise Brennstoffzellen oder Solarmodule umfassen. Auch bei derartigen Energieumwandlungssystemen werden eine Vielzahl von Zellen zur Erhöhung der Gesamtspannung in Reihe und zur Erhöhung der Ladung bzw. des Stromflusses parallel geschaltet.

### ZUSAMMENFASSUNG DER ERFINDUNG

Der Erfindung liegt die Aufgabe zugrunde, ein System zur Energiespeicherung oder Energieumwandlung anzugeben, das die oben genannten Probleme vermeidet.

Diese Aufgabe wird durch ein System nach Anspruch 1 und ein Verfahren, ein Herstellungsverfahren für ein solches System nach Anspruch 27 und ein Verfahren zum Bereitstellen einer gewünschten Spannung oder einer Phase einer gewünschten Spannung nach Anspruch 29, nach Anspruch 22 gelöst. Vorteilhafte Weiterbildungen sind in den abhängigen Ansprüchen angegeben.

Erfindungsgemäß wird ein modulares Energiespeicher-Direktumrichtersystem angegeben, das mindestens einen Brückenzweig umfasst, der eine Mehrzahl von hintereinander geschalteten Modulen umfasst. Dabei umfasst jedes der genannten Module
- mindestens zwei erste Anschlüsse und mindestens zwei zweite Anschlüsse,
- ein Speicherelement für elektrische Energie, insbesondere eine Batterie, oder ein Energieumwandlungselement, und
- eine Mehrzahl von Schaltern,
wobei bei jeweils zwei benachbarten Modulen aus den genannten Modulen die ersten Anschlüsse des einen Moduls direkt oder über eine dazwischengeschaltete Komponente mit den zweiten Anschlüssen des anderen Moduls verbunden sind.

Das System umfasst ferner eine Steuereinrichtung, die dazu eingerichtet ist, Informationen bezüglich des aktuellen Ladezustandes der Speicherelemente bzw. bezüglich der Spannung oder Leistung der Energieumwandlungselemente zu erhalten, und die geeignet ist, zumindest einen Teil der genannten Mehrzahl von Schaltern in Abhängigkeit von dem aktuellen Ladezustand der Speicherelemente bzw. der aktuellen Leistung oder Spannung der Energieumwandlungselemente in einem Energieabgabemodus derart anzusteuern, dass der Brückenzweig als Ganzes eine gewünschte Spannung oder eine Phase einer gewünschten Spannung liefert. Dabei sind die genannten Module so ausgelegt und ansteuerbar, dass
- das Speicherelement bzw. Energieumwandlungselement eines Moduls wahlweise deaktiviert werden kann, und
- die Speicherelemente bzw. Energieumwandlungselemente von zwei Modulen, die durch mindestens ein dazwischenliegendes Modul mit deaktiviertem Speicherelement/Energieumwandlungselement getrennt sind, wahlweise parallel und in Reihe schaltbar sind.

Bei dem System der Erfindung handelt es sich um ein "modulares" System, weil es eine Vielzahl von hintereinander geschalteten Module umfasst, wobei jedes der genannten hintereinander geschalteten Modulen entweder ein Speicherelement für elektrische Energie, beispielsweise eine Batterie, oder ein Energieumwandlungselement, beispielsweise eine Solarzelle oder eine Brennstoffzelle umfasst, das chemische bzw. Lichtenergie in elektrische Energie umwandeln kann. Es ist möglich, dass dasselbe System sowohl Speicherelemente für elektrische Energie als auch Energieumwandlungselemente umfasst. Tatsächlich kann sogar ein einzelnes Modul sowohl ein Speicherelement also auch ein Energieumwandlungselement enthalten. Es sind aber auch Ausführungen denkbar, in denen nur Speicherelemente, also beispielsweise Batterien oder Batteriezellen, vorhanden sind. Schließlich ist es auch denkbar, dass das System ausschließlich Energieumwandlungselemente enthält. Da aber die Hauptanwendungen des Systems Fälle betreffen, in denen mindestens ein Speicherelement für elektrische Energie vorgesehen ist, wird das System als "Energiespeichersystem" bezeichnet, wobei hierunter im Sprachgebrauch der vorliegenden Offenbarung auch der Spezialfall enthalten sein soll, dass das System lediglich Energieumwandlungselemente umfasst.

Schließlich handelt es sich insofern um ein "Direktumrichtersystem", als das System dazu eingerichtet ist, zumindest einen Teil der genannten Mehrzahl von Schaltern in Abhängigkeit von dem aktuellen Ladezustand der Speicherelemente bzw. der aktuellen Leistung oder Spannung der Energieumwandlungselemente in einem Energieabgabemodus derart anzusteuern, dass der Brückenzweig als Ganzes bereits eine gewünschte Spannung oder eine Phase einer gewünschten Spannung liefert, so dass kein weiterer Umrichter mehr benötigt wird.

Man beachte, dass Module mit der Möglichkeit zur dynamischen Reihen- und Parallelschaltung von Einzelmodulen bereits in der WO2012/072168 A2 offenbart wurden, dort jedoch im Zusammenhang mit einer Multilevelkonvertertopologie. Anders als bei dem Multilevelkonverter ist bei der Erfindung aber vorgesehen, dass ein Speicherelement bzw. Energieumwandlungselement eines Moduls wahlweise deaktiviert werden kann, und dass die Speicherelemente bzw. Energieumwandlungselemente von zwei Modulen, die durch mindestens ein dazwischenliegendes Modul mit deaktiviertem Speicherelement/Energieumwandlungselement getrennt sind, wahlweise parallel und in Reihe schaltbar sind.

Durch die Möglichkeit, nicht nur benachbarte Module, sondern auch solche Module, die lediglich durch deaktivierte Module getrennt sind, wahlweise sowohl in Reihe als auch parallel zu schalten, lassen sich die eingangs genannten Probleme im Stand der Technik auf elegante und kostengünstige Weise vermeiden.

Wie unten anhand von Ausführungsbeispielen näher ersichtlich wird, wird zur Abgabe von Energie kein Umladen zwischen Speicherelementen benötigt. Stattdessen ist es möglich, die Speicherelemente oder Energieumwandlungselemente im Energieabgabemodus derart zu verschalten, dass der Brückenzweig als Ganzes bereits eine gewünschte Spannung oder eine Phase einer gewünschten Spannung liefert, also kein weiterer Umrichter benötigt wird, gleichzeitig aber eine Ausbalancierung der Ladung zwischen einzelnen Speicherelementen/Energieumwandlungselementen durch Umladen vermieden werden kann. Hierzu ist es von entscheidender Bedeutung, dass einzelne Module wahlweise deaktiviert werden können, beispielsweise weil sie nicht den momentan benötigten Ladungszustand aufweisen, und zugeschaltet werden können, wenn ihr aktueller Ladungs-, Spannungs- oder Leistungszustand zu der gewünschten Energieabgabe "passt". Insbesondere kann eine Gruppe von benachbarten Modulen sowohl beim Laden als auch dem Entladen nacheinander zeitgesteuert derart parallel geschaltet werden, dass trotz anfänglich unterschiedlicher Ladezustände kein Ladungstransfer zwischen Modulen benötigt wird, wie unten anhand von Ausführungsbeispielen näher erläutert wird.

Ferner gestattet das modulare Energiespeicher-Direktumrichtersystem die Verwendung von Speicherelementen/Energieumwandlungssystemen unterschiedlichen Typs oder auch unterschiedlichem Alterungszustandes, ohne dass dies automatisch zu einer Verminderung der Leistungsfähigkeit oder einem Verlust an Effizienz führt.

In einer vorteilhaften Weiterbildung ist die Steuereinrichtung geeignet, in einem Lademodus zumindest einen Teil der genannten Mehrzahl von Schaltern in Abhängigkeit von dem aktuellen Ladezustand der Speicherelemente bzw. der aktuellen Leistung oder Spannung der Energieumwandlungselemente anzusteuern, um zumindest einen Teil der Speicherelemente durch eine externe am Brückenzweig anliegende AC- oder DC-Spannung aufzuladen. Demgemäß wird kein zusätzlicher Ladeumrichter verwendet, wie er beispielsweise gegenwärtig bei Elektroautos benötigt wird. Das System der Erfindung kann im Grunde durch beliebige externe Spannungen effizient aufgeladen werden. Dies hat beispielsweise bei der Verwendung in Elektroautomobilen einen großen Vorteil, weil kein zusätzlicher Ladeumrichter im Fahrzeug vorhanden sein muss bzw. weil keine Ladestationen mit einem solchen Ladeumrichter benötigt werden, was die Flexibilität enorm erhöht. Stattdessen kann das Elektroauto z. B. wahlweise mit Drehstrom mit einer effektiven Spannung von 400 V oder mit 230 V Wechselspannung geladen werden, je nach Verfügbarkeit.

In einer vorteilhaften Weiterbildung hat das Speicherelement/Energieumwandlungselement eines Moduls zwei Pole. Ferner ist das Speicherelement/Energieumwandlungselement durch eine Stellung der Schalter des betreffenden Moduls, in der mindestens einer der Pole des Speicherelements/Energieumwandlungselements mit keinem der ersten und zweiten Anschlüsse verbunden ist, deaktivierbar.

Wie aus den nachstehenden Ausführungsbeispielen ersichtlich wird, sind viele Möglichkeiten denkbar, ein Speicherelement/Energieumwandlungselement deaktivierbar zu machen, und die Erfindung ist auf keine spezielle Schaltung beschränkt. Als vorteilhaft haben sich jedoch solche Systeme erwiesen, bei denen einer der Pole des Speicherelements/Energieumwandlungselements durch einen zugehörigen Schalter vom Rest des Moduls abkoppelbar ist. Dies erlaubt die gewünschte Funktionalität mit einer vergleichsweise geringen Anzahl an Schaltern.

In einer Ausführungsform können die Module in allen vier Quadranten der Strom-Spannungsebene betrieben werden. Insbesondere sind dabei die Module so ausgelegt und ansteuerbar, dass die Speicherelemente/Energieumwandlungselemente zweier benachbarter Module
- in Reihe mit gleicher Polarität,
- in Reihe mit entgegengesetzter Polarität,
- parallel mit gleicher Polarität, und
- parallel mit entgegengesetzter Polarität
geschaltet werden können. Die Verwendung derartiger "Vier-Quadranten-Module" gestattet eine maximale Flexibilität sowohl im Lademodus als auch im Energieabgabemodus.

Alternativ können die Module jedoch auch so ausgelegt sein, dass sie nur in zwei Quadranten der Strom-Spannungsebene betrieben werden können. In diesem Fall kann eine Zusatzschaltung vorgesehen sein, durch die eine Kette von hintereinander geschalteten Zwei-Quadrantenmodulen als Ganzes umgepolt werden können.

Auch ist es möglich, dass die genannten Vier-Quadrantenmodule zumindest teilweise durch eine umpolbare Kette von mindestens zwei Zwei-Quadrantenmodulen gebildet sind.

In einer vorteilhaften Ausführungsform haben die genannten Module drei oder mehr erste und zweite Anschlüsse.

In einer vorteilhaften Ausführungsform sind die mindestens zwei äußeren Anschlüsse in dem ersten und/oder letzten Modul des Brückenzweigs miteinander verbunden.

Das Energiespeicher-Direktumrichtersystem der Erfindung kann zwei, drei, vier, fünf oder mehr Brückenzweige enthalten. An den Orten, wo die Brückenzweige aneinanderstoßen, können die Phasen einer gewünschten Spannung abgegriffen werden.

In einer vorteilhaften Ausführungsform sind die mindestens zwei äußeren Anschlüsse im ersten und/oder letzten Modul eines Brückenzweiges separat mit mindestens zwei äußeren Anschlüssen eines Moduls eines angrenzenden Brückenzweigs verbunden.

In einer vorteilhaften Weiterbildung sind zwei, drei, vier, fünf oder mehr Brückenzweige in einer Sterntopologie oder in einer Ringtopologie miteinander verschaltet.

In einer besonders vorteilhaften Ausführungsform sind die zwei, drei, vier, fünf oder mehr Brückenzweige derart in einer Ringtopologie verschaltet, dass die mindestens zwei äußeren Anschlüsse eines jeden Brückenzweiges separat mit den mindestens zwei äußeren Anschlüssen des angrenzenden Brückenzweiges verbunden sind, und ist die Steuereinrichtung dazu eingerichtet, zumindest einen Teil der genannten Mehrzahl von Schalten so anzusteuern, dass mindestens zwei voneinander unabhängige Ringströme durch den Ring aus Brückenzweigen fließen können. Hierbei kann beispielsweise der eine Ringstrom zum Ausgleich einer Asymmetrie eines entsprechenden mehrphasigen Netzes genutzt werden. Beispielsweise sind die drei Ströme eines dreiphasigen Netzes auf Grund einer unsymmetrischen Last vom Betrag her nicht gleich groß. Der Ringstrom der Ringtopologie ermöglicht hierbei einen Leistungstransfer der Phasen untereinander in der Weise, dass die Ströme aus Sicht der Quelle betragsgleich erscheinen. Der zweite Ringstrom kann zum Ausgleich der Ladungszustände einzelner Speicher-/Energieumwandlungselemente - auch über die Phasen des Direktumrichters hinweg - genutzt werden.

In einer vorteilhaften Weiterbildung können innerhalb des mindestens einen Brückenzweigs, insbesondere innerhalb eines Moduls oder zwischen benachbarten Modulen Induktivitäten vorgesehen sein. Diese Induktivitäten können dazu dienen, Stromspitzen beim Umschalten der Spannung zu reduzieren.

Vorzugsweise sind die genannten Schalter zumindest überwiegend durch MOS-FETs, IGBTs, IGCTs oder Thyristoren gebildet.

Die Speicherelemente können durch eines oder mehrere der folgenden Elemente gebildet sein:
- einen Kondensator,
- eine Batteriezelle, insbesondere eine Second-Use-Zelle oder
- eine Redox-Flowzelle.

Die genannten Energieumwandlungselemente können durch Solarzellen, Brennstoffzellen oder Thermoelemente gebildet sein.

In einer vorteilhaften Weiterbildung umfasst zumindest ein Teil der genannten Module ein Speicherelement und zumindest ein Teil der Module ein Energieumwandlungselement. Ein solches System ist beispielsweise vorteilhaft, wenn Solarzellen als Energieumwandlungselemente verwendet werden. Mit einem solchen System kann auch bei schwankender Sonneneinstrahlung stets eine gewünschte Spannung oder Phase einer gewünschten Spannung abgegeben werden. Wenn die durch die Solarzellen erzeugte Leistung die abgegriffene Leistung übersteigt, kann die überschüssige Energie zum Laden der Speicherelemente verwendet werden. Umgekehrt können zu Zeiten geringerer Sonneneinstrahlung die Solarzellen durch die Speicherelemente unterstützt werden, so dass gleichwohl die erforderliche Leistung abrufbar ist.

Das System der Erfindung gestattet allerdings nicht nur Speicherelemente und Energieumwandlungselemente in demselben Energiespeicher-Direktumrichtersystem zu kombinieren. Ein besonderer Vorteil liegt auch darin, dass in dem System der Erfindung Speicherelemente unterschiedlichen Typs oder mit unterschiedlichen Alterungsgraden bzw. "state of health" ihrer Leistungsfähigkeit entsprechend optimal eingesetzt und miteinander kombiniert werden können. In einer vorteilhaften Ausführungsform hat daher ein Teil der Module Speicherelemente eines ersten Typs und ein anderer Teil der Module Speicherelemente eines zweiten Typs, der von dem ersten Typ verschieden ist, wobei sich der erste Typ und der zweite Typ insbesondere in einem oder mehreren der folgenden Merkmale unterscheiden:
- Ladezeit,
- Innenwiderstand, und
- Kapazität.

Dies ist ein bedeutender Vorteil gegenüber herkömmlichen Batteriesystemen, bei denen die verwendeten Zellen stets annähernd gleichartig sein müssen und Abweichungen in der Regel zulasten der Effizienz oder der Kapazität gehen. Die Möglichkeit, Speicherelemente unterschiedlichen Typs oder mit unterschiedlichen Eigenschaften zu kombinieren hat eine Vielzahl von praktischen Vorteilen. Beispielsweise können Speicherelemente für unterschiedliche Zwecke vorgesehen sein, um unter unterschiedlichen Bedingungen unterschiedlichen Anforderungen gerecht zu werden. Beispielsweise können Speicherelemente vorgesehen sein, die ausgesprochen schnell ladefähig sind, und Zellen vorgesehen sein, die eine ausgesprochen große Kapazität haben, aber dafür weniger schnell geladen werden können.

Weiterhin ist es von Vorteil, dass Unterschiede durch Alterungsprozesse, die bei unterschiedlichen Exemplaren desselben Typs oft unterschiedlich schnell voranschreiten, nicht zu einer grundsätzlichen Beeinträchtigung des Systems führen, und daher in sehr großem Umfang toleriert werden können. Insofern können die Speicherelemente wesentlich länger verwendet werden, als in herkömmlichen Batteriesystemen.

Tatsächlich finden sogar sog. Second-Use-Batterien, die für andere Anwendungen bereits aussortiert werden mussten, im System der Erfindung sinnvolle Verwendung. Insofern kann es sehr kostengünstig mit gebrauchten Speicherelementen aufgebaut oder ergänzt werden, für die andernfalls kaum Verwendung bestünde. Aufgrund des modularen Aufbaus ist das System zudem leicht mit gebrauchten Speicherelementen erweiterungs- und ergänzungsfähig.

Schließlich ist es auch möglich, dass zumindest ein Teil der Module sowohl ein Speicherelement als auch ein Energieumwandlungselement enthält, wie eingangs bereits erwähnt wurde.

In einer vorteilhaften Ausführungsform ist die Steuereinrichtung geeignet, Gruppen von Modulen zu bestimmen, deren Speicherelemente parallel zu schalten sind, wobei die Steuereinrichtung dazu eingerichtet ist, zumindest einen Teil der genannten Mehrzahl von Schaltern in Abhängigkeit von dem aktuellen Ladezustand der Speicherelemente derart anzusteuern, dass vor dem Parallelschalten der Module 14 der Gruppe die Spannungen oder Ladezustände der Module angeglichen werden, indem während eines Ladevorgangs Module 14, oder Moduluntergruppen, die eine geringere Spannung bzw. einen geringeren Ladezustand aufweisen, bevorzugt geladen werden, und/oder während eines Energieabgabemodus Module 14 oder Moduluntergruppen, die eine hohe Spannung bzw. einen hohen Ladezustand aufweisen, bevorzugt entladen werden.

Auf diese Weise können die Ladezustände der Module angeglichen werden, ohne dass Ladung von einem Modul zu einem anderen Modul umgeladen werden müsste, was unvermeidlich zu Verlusten führen würde. Damit kann erreicht werden, dass sämtliche Speicherelemente in einem erfindungsgemäßen System zu jedem Zeitpunkt sehr ähnliche Ladezustände aufweisen. Damit bestimmt nicht - wie bei bisherigen Batteriesystemen - diejenige Zelle mit der geringsten Kapazität die beiden Gesamtladezustände "voll" oder "leer"; stattdessen kann die entsprechende Gesamtkapazität eines solchen Systems wesentlich besser genutzt werden.

In einer weiteren vorteilhaften Ausführungsform ist die Steuereinrichtung dazu eingerichtet, die Kapazität des Speicherelementes eines Moduls zu bestimmen, indem das Speicherelement im laufenden Betrieb des Systems vollständig geladen und vollständig entladen wird und die Energie, welche in das bzw. aus dem Speicherelement fließt, erfasst wird.

Schließlich ist die Steuerungseinrichtung vorzugsweise geeignet, fehlerhafte Module durch Überprüfung zu identifizieren, wobei die Überprüfung eines oder mehrere der folgenden Kriterien beinhaltet:
- Ist das Speicherelement defekt?
- Ist das Speicherelement kurzgeschlossen oder offen?
- Ist ein Bypassmodus möglich?
- Welche Schaltzustände sind noch möglich?

In einer vorteilhaften Ausführungsform ist die Steuereinrichtung dazu eingerichtet, zumindest einen Teil der Schalter derart anzusteuern, dass das System eine Netzspannung, insbesondere eine drei-phasige Netzspannung von 1000 V oder weniger, vorzugsweise von ungefähr 400 V ausgibt.

Ein besonders vorteilhafter Anwendungsfall hierfür sind Solaranlagen, bei denen die Solarzellen bzw. Solarzellenmodule die Energieumwandlungselemente bilden, und die durch die Solarzellen erzeugten Spannungen direkt in eine Netzspannung umgerichtet werden können. Wenn das Aufkommen an Solarenergie den aktuellen Verbrauch übersteigt, kann die zusätzliche Energie, wie oben beschrieben, in zusätzlich vorgesehenen Speicherelementen gespeichert werden und dann zu Zeiten, in denen der Strombedarf das Aufkommen der Solarzellen übersteigt, als Netzspannung aus dem System entnommen werden.

Die Erfindung betrifft ferner einen elektrischen Antrieb für ein Fahrzeug, der ein modulares Energiespeicher-Direktumrichtersystem nach einer der zuvor beschriebenen Ausführungsformen umfasst. Wie eingangs erwähnt, wird für diesen Fall kein zusätzlicher Umrichter für den Motorbetrieb und auch kein Ladeumrichter benötigt. Ferner kommen gerade bei elektromobilen Anwendungen die Vorteile des Systems, nämlich eine erhöhte Energieeffizienz, Schonung der Batteriezellen und die Fähigkeit, dass die Minderung einzelner Zellen keinen Einfluss auf das Leistungsverhalten der weiteren Zellen im Verbund hat, besonders zum Tragen.

### KURZBESCHREIBUNG DER FIGUREN

- Fig. 1: ist eine schematische Darstellung eines Energiespeicher-Direktumrichtersystems nach einer Ausführungsform der Erfindung mit einem einzigen Brückenzweig.
- Fig. 2: ist eine schematische Darstellung eines Energiespeicher-Direktumrichtersystems mit zwei Brückenzweigen und drei externen Anschlüssen zum Erzeugen von drei Spannungsphasen.
- Fig. 3a, b: zeigen Energiespeicher-Direktumrichtersysteme mit drei Brückenzweigen, die in einer Sterntopologie angeordnet sind, wobei jedes Modul zwei erste und zwei zweite Anschlüsse hat.
- Fig. 4: zeigt ein Energiespeicher-Direktumrichtersystem mit drei Brückenzweigen, die in einer Sterntopologie angeordnet sind, wobei jedes Modul drei erste und drei zweite Anschlüsse hat.
- Fig. 5: ist eine schematische Darstellung eines Energiespeicher-Direktumrichtersystems mit einer Ringtopologie.
- Fig. 6: zeigt eine Hintereinanderschaltung von Modulen mit zusätzlichen Induktivitäten.
- Fig. 7-12: zeigen Vier-Quadranten-Module mit zwei ersten und zwei zweiten Anschlüssen.
- Fig. 13-18: zeigen Vier-Quadranten-Module mit drei ersten und drei zweiten Anschlüssen.
- Fig. 19-20: zeigen Zwei-Quadranten-Module mit zwei ersten und zwei zweiten Anschlüssen.
- Fig. 21-22: zeigen Zwei-Quadranten-Module mit drei ersten und drei zweiten Anschlüssen sowie mit einer zusätzlichen Schaltung zum Umpolen einer Hintereinanderschaltung solcher Module.
- Fig. 23: ist ein Flussdiagramm, welches die Erzeugung eines gewünschten Spannungslevels veranschaulicht.
- Fig. 24: ist ein Flussdiagramm eines Prozesses, in dem fehlerhafte Module identifiziert werden.
- Fig. 25: ist ein Flussdiagramm eines Prozesses, nach dem Module mit Spannungsdifferenzen in ihrer Spannung angeglichen und parallelgeschalte werden.
- Fig. 26: ist ein Flussdiagramm, das die Überprüfung der Kapazität eines Moduls im laufenden Betrieb veranschaulicht.

### BESCHREIBUNG DER BEVORZUGTEN AUSFÜHRUNGSFORM

Zum besseren Verständnis der vorliegenden Erfindung wird im Folgenden auf das in den Zeichnungen dargestellte bevorzugte Ausführungsbeispiel Bezug genommen, das anhand spezifischer Terminologie beschrieben ist. Es sei jedoch darauf hingewiesen, dass der Schutzumfang der Erfindung dadurch nicht eingeschränkt werden soll, da derartige Veränderungen und weitere Modifizierungen an der gezeigten Vorrichtung und dem Verfahren sowie derartige weitere Anwendungen der Erfindung, wie sie darin aufgezeigt sind, als übliches derzeitiges oder künftiges Fachwissen eines zuständigen Fachmanns angesehen werden.

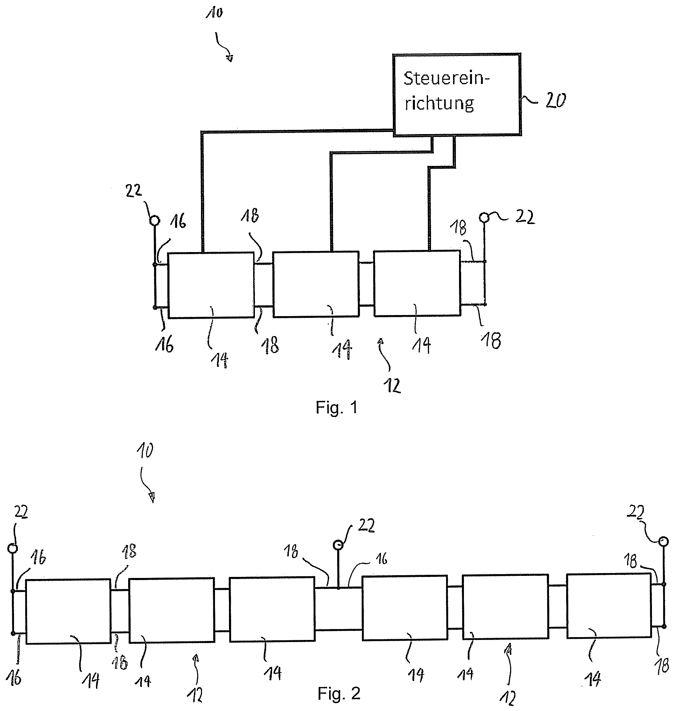

Fig. 1 zeigt ein Ausführungsbeispiel eines modularen Energiespeicher-Direktumrichtersystems 10 nach einer Ausführungsform der Erfindung. Das System 10 umfasst einen Brückenzweig 12, der eine Mehrzahl von hintereinander geschalteten Modulen 14 umfasst. Der Einfachheit halber sind in Fig. 1 lediglich drei hintereinander geschaltete Module 14 gezeigt, es versteht sich jedoch, dass die Anzahl an Modulen 14 in einem Brückenzweig 12 in praktischen Anwendungen wesentlich größer sein wird und durchaus über 100, in manchen Anwendungen über 1000 und sogar mehrere 1000 betragen kann. Jedes der Module 14 hat zwei erste Anschlüsse 16 und zwei zweite Anschlüsse 18, die in der Darstellung von Fig. 1 lediglich für das Modul 14 ganz links im Brückenzweig gezeigt sind. Bei jeweils zwei benachbarten Modulen 14 sind die ersten Anschlüsse 16 des einen Moduls direkt mit den zweiten Anschlüssen 18 des benachbarten Moduls verbunden. Anstelle einer direkten Verbindung, wie sie in Fig. 1 gezeigt ist, können jedoch Anschlüsse benachbarter Module auch indirekt über eine dazwischengeschaltete Komponente verbunden sein.

Jedes der Module 14 enthält ein Speicherelement für elektrische Energie, insbesondere eine Batterie, oder ein Energieumwandlungselement (in Fig. 1 nicht gezeigt), und eine Mehrzahl von Schaltern (in Fig. 1 nicht gezeigt). Unter Batterie kann dabei wiederum eine einzelne Zelle bzw. eine Parallel- und/oder Reihenschaltung von Zellen eines Akkumulators verstanden werden. Eine Vielzahl von möglichen Ausführungsformen für den inneren Aufbau der Module 14 werden unten im Detail gezeigt.

Schließlich umfasst das System 10 von Fig. 1 eine Steuerung 20, die dazu eingerichtet ist, Informationen bezüglich des aktuellen Ladezustandes der Speicherelemente (nicht gezeigt) bzw. bezüglich der Spannung oder Leistung der Energieumwandlungselemente (nicht gezeigt) zu erhalten. Ferner ist die Steuereinrichtung 20 geeignet, zumindest einen Teil der genannten Mehrzahl von Schaltern in Abhängigkeit von dem aktuellen Ladezustand der Speicherelemente bzw. der aktuellen Leistung oder Spannung der Energieumwandlungselemente in einem Energieabgabemodus derart anzusteuern, dass der Brückenzweig 12 als Ganzes eine gewünschte Spannung zwischen seinen Endanschlüssen 22 liefert. An den Endanschlüssen 22 werden in dem Ausführungsbeispiel von Fig. 1 die ersten Anschlüsse 16 des am weitesten links stehenden Moduls 14 und die zweiten Anschlüsse 18 des am weitesten rechts stehenden Moduls 14 zusammengeführt, und die anliegende Spannung wird abgegriffen. Die in Fig. 1 dargestellten Verbindungen von der Steuereinrichtung 20 zu den einzelnen Modulen 14 sind symbolisch zu verstehen. Es kann sich hierbei um jeweils eine oder mehrere Leitungen zu den Modulen 14 handeln oder um eine Funkverbindung; weiterhin kann die Steuereinrichtung 20 auch über einen Datenbus mit einem oder mehreren Modulen verbunden sein, so dass Steuerinformationen über den Datenbus zu weiteren Modulen weitergereicht werden können. Die Steuereinrichtung 20 kann die Mehrzahl von Schaltern, auch in einem Ladezustand so ansteuern, dass eine Energieaufnahme bei gegebenem Spannungsniveau an den Endanschlüssen 22 möglich ist.

Wie unten anhand konkreter Ausführungsbeispiele im Detail erläutert wird, sind die Module 14 so ausgelegt, und ansteuerbar, dass
- das Speicherelement bzw. Energieumwandlungselement eines Moduls 14 wahlweise deaktiviert werden kann, und
- dass die Speicherelemente bzw. Energieumwandlungselemente von zwei Modulen 14, die durch mindestens ein dazwischenliegendes Modul 14 mit deaktiviertem Speicherelement/Energieumwandlungselement getrennt sind, wahlweise parallel und in Reihe schaltbar sind.

In diesem Zusammenhang bedeutet das "Deaktivieren" eines Speicherelements/Energieumwandlungselementes, das das betreffende Element nicht am Energieabgabeprozess oder einem Ladeprozess beteiligt ist. Durch die Fähigkeit, einzelne deaktivierte Module 14 zu "überspringen" und gleichwohl solche Module 14, die durch deaktivierte Module getrennt sind, wahlweise parallel und in Reihe zu schalten, können quasi beliebige Spannungsverläufe als Ausgabe an den Anschlüssen 22 erzeugt werden, und das System 10 kann durch praktisch beliebige, an den äußeren Anschlüssen 22 anliegende Spannungen, egal ob DC oder AC, geladen werden, und zwar in beiden Fällen so, dass ein verlustbehaftetes Umladen zwischen den Modulen 14 vermieden werden kann. Man beachte, dass in der folgenden Beschreibung die Begriffe "Parallel-" bzw. "Reihenschaltung" von Modulen bedeuten sollen, dass die betreffenden Speicherelemente für elektrische Energie bzw. Energieumwandlungselemente parallel- bzw. in Reihe geschaltet sind.

Fig. 2 zeigt eine Ausführungsform eines weiteren Systems 10, welches zwei Brückenzweige 12 mit insgesamt drei äußeren Anschlüssen 22 umfasst. An den äußeren Anschlüssen 22 können beispielsweise drei Phasen einer Spannung abgegriffen werden. Man beachte, dass ähnlich wie in der Ausführungsform von Fig. 1 an dem linken äußeren Anschluss 22 die ersten Anschlüsse 16 des angrenzenden Moduls 14 zusammengeführt sind, und dass an dem rechten äußeren Anschluss 22 die beiden zweiten Anschlüsse 18 des angrenzenden Moduls 14 ebenfalls zusammengeführt sind. In der Ausführungsform von Fig. 2 ist der Ausgang 22 zwischen den beiden Brückenzweigen 12 jedoch nur mit jeweils einem ersten bzw. zweiten Ausgang der angrenzenden Module 14 verbunden. Auf diese Weise wird ein zusätzlicher Strompfad in dem Gesamtsystem gebildet, wodurch sich die Anzahl der Freiheitsgrade und die Operationsmöglichkeiten erhöhen. Es wäre aber auch möglich, die ersten bzw. zweiten Anschlüsse 16, 18 der angrenzenden Module 14 am mittleren Anschluss 22 zusammenzuführen.

Man beachte, dass das modulare Energiespeicher-Direktumrichtersystem 10 von Fig. 2, ebenso wie die weiteren nachstehend beschriebenen Systeme, gleichfalls über eine Steuereinrichtung 20 verfügt, die Informationen bezüglich der Ladezustände, Spannungen oder Leistungen empfängt und die Schalter der Module 14 entsprechend ansteuert, die aber in den folgenden Abbildungen der Einfachheit halber nicht mehr gezeigt ist.

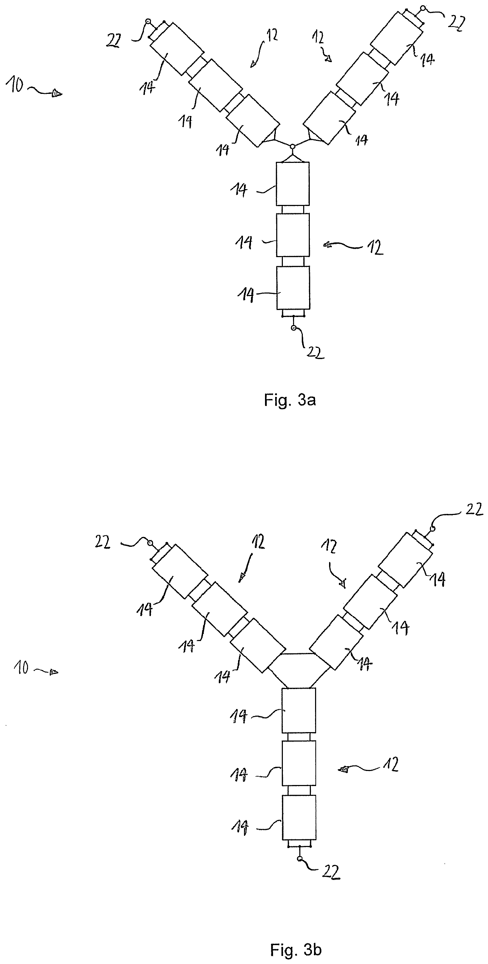

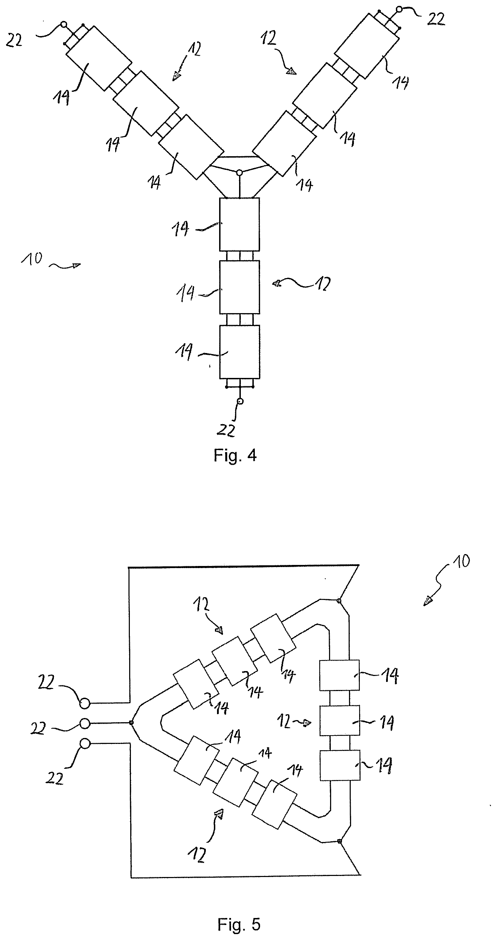

Fig. 3a zeigt ein weiteres Ausführungsbeispiel eines modularen Energiespeicher-Direktumrichtersystems 10, das drei Brückenzweige 12 enthält, die in einer Sternstruktur angeordnet sind. An den jeweils außenliegenden äußeren Anschlüssen 22 der Brückenzweige 12 können drei Phasen abgegriffen werden. Die Anschlüsse der jeweils innenliegenden Module 14 werden im topologischen Mittelpunkt des Systems zusammengeführt. Sie können aber auch, wie in der Abwandlung von Fig. 3b gezeigt ist, separat mit jeweils einem zugehörigen Anschluss eines innenliegenden Moduls 14 eines anderen Brückenzweiges verbunden werden. Schließlich zeigt Fig. 4 eine weitere Variante, bei der jedes Modul 14 drei erste und drei zweite Anschlüsse hat. Von den jeweils drei innenliegenden Anschlüssen der innenliegenden Module 14 wird in der Ausführungsform von Fig. 4 einer verbunden, während die anderen beiden Anschlüsse separat mit Anschlüssen eines innenliegenden Moduls 14 eines anderen Brückenzweiges 12 verbunden ist.

Man beachte, dass im Betrieb nicht sämtliche Phasen des Systems 10 benutzt werden müssen. Beispielsweise kann jedes der in Fig. 2 - 4 gezeigten dreiphasigen Systeme 10 auch über einen Ein-Phasen-Wechselstrom oder sogar über Gleichstrom an nur zwei Anschlüssen 22 geladen und entladen werden. Es wäre also beispielsweise möglich, das System 10 mit 230 V-Wechselstrom zu laden, im Betrieb aber 400 V-Drehstrom abzugeben. Im konkreten Anwendungsfall der Elektromobilität würde dies z.B. bedeuten, dass ein Elektrofahrzeug wahlweise mit 230 V-Wechselstrom oder 400 V Drehstrom geladen werden könnte, je nach Verfügbarkeit.

Man beachte, dass die in Fig. 3a - 4 gezeigte Sterntopologie sich auf eine beliebige Anzahl von Phasen abwandeln lässt, indem weitere Brückenzweige 12 in die Sternstruktur eingefügt werden.

Fig. 5 zeigt ein weiteres Energiespeicher-Direktumrichtersystem 10, bei dem drei Brückenzweige 12 in einer Ringstruktur angeordnet sind. In dem gezeigten Ausführungsbeispiel werden die Anschlüsse der Module 14, die an den inneren Enden der Brückenzweige 12 liegen, nicht zusammengeführt, obwohl dies in einer alternativen Ausführungsform gleichwohl möglich wäre. Der Vorteil der in Fig. 5 gewählten Topologie besteht darin, dass zwei kontrollierte und voneinander unabhängige Ringströme geführt werden können, wobei der eine Ringstrom beispielsweise zum Ausgleich einer Asymmetrie des entsprechenden mehrphasigen Netzes genutzt werden kann, während der zweite Ringstrom zum Ausgleich der Ladungszustände einzelner Energiewandlungs-bzw. Speicherelemente - auch über die Phasen des Systems 10 hinweg - genutzt werden kann. Auch für das in Fig. 5 gezeigte Energiespeicher-Direktumrichtersystem 10 gilt, dass auch hier eine Ladung oder Entladung über nur zwei der drei Abgriffe 22 mit Wechselstrom oder Gleichstrom erfolgen kann. Weiterhin lässt sich auch hier die Topologie auf eine beliebige Phasenzahl erweitern. Weiterhin ist anzumerken, dass auch bei Ausfall eines ganzen Brückenzweiges 12 die Funktionsfähigkeit zur Erzeugung eines entsprechenden mehrphasigen Spannungssystems erhalten bleibt. Lediglich die Erzeugung des zweiten Ringstroms für Ausgleichsvorgänge wird in einem solchen Fall unterbrochen.

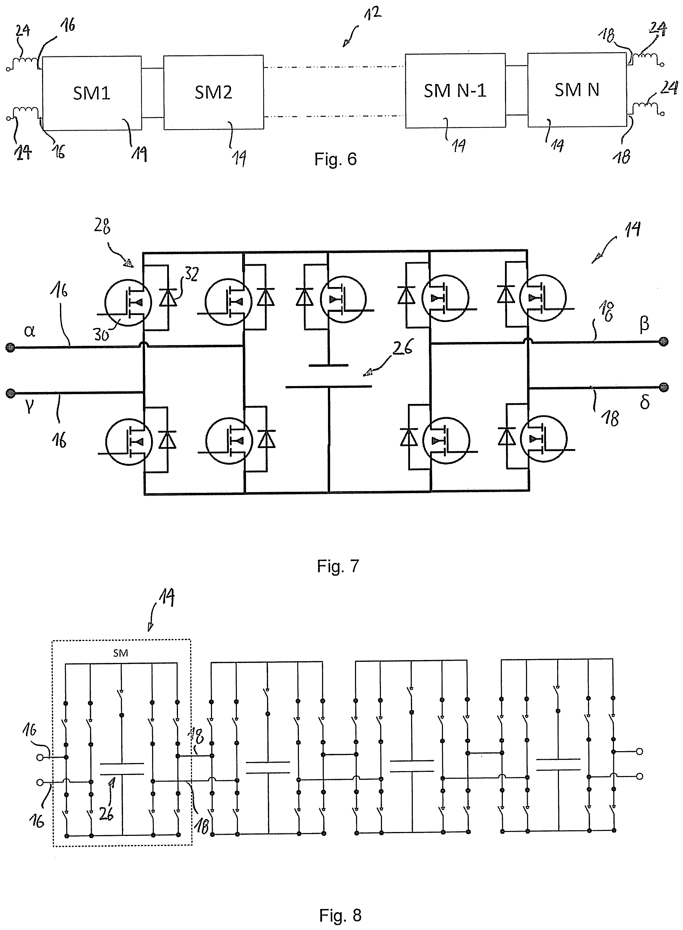

Fig. 6 zeigt schematisch einen Brückenzweig 12 mit einer Anzahl N von hintereinander geschalteten Modulen, die durch "SM" (Schaltmodul) gekennzeichnet sind. An den ersten Anschlüssen 16 des ersten Moduls bzw. den zweiten Anschlüssen 18 des Nten Moduls sind jeweils Induktivitäten 24 vorgesehen, die dazu bestimmt sind, Spannungsspitzen abzudämpfen.

Derartige Induktivitäten 24 könnten auch zwischen den Modulen 14 oder innerhalb der Module 14 vorgesehen sein.

### Aufbau der Module

Im Folgenden wird unter Bezugnahme auf Figuren 7 bis 22 eine Vielzahl von Modulen 14 vorgestellt, die in dem modularen Energiespeicher-Direktumrichtersystem 10 nach einer der Ausführungsformen der Erfindung Anwendung finden können. Diese Module 14 fassen einige der gegenwärtig bevorzugten Ausführungsformen zusammen, aber es versteht sich, dass auch andere Module 14 zum Einsatz kommen können, sofern sie den oben definierten Anforderungen des Systems 10 genügen.

In der folgenden Beschreibung wird unterschieden zwischen solchen Modulen, die zwei erste und zwei zweite Anschlüsse 16, 18 aufweisen und solchen, die jeweils drei erste und drei zweite Anschlüsse 16, 18 aufweisen. Es versteht sich, dass die Erfindung nicht auf diese Ausführungsformen beschränkt ist, und dass insbesondere auch mehr als drei erste und drei zweite Anschlüsse 16, 18 vorgesehen sein können.

Ferner wird in der folgenden Darstellung unterschieden zwischen Modulen, die in allen vier Quadranten der Strom-Spannungs-Ebene betrieben werden können (in der folgenden Beschreibung "Vier-Quadranten-Module") und solchen, die in lediglich zwei Quadranten der Strom-Spannungs-Ebene betrieben werden können ("Zwei-Quadranten-Module").

### Vier-Quadranten-Module mit zwei ersten und zwei zweiten Anschlüssen

Fig. 7 - 12 zeigen Beispiele für Vier-Quadranten-Module mit jeweils zwei ersten und zwei zweiten Anschlüssen 16, 18. Konkret zeigt Fig. 7 ein Modul 14 mit einem Speicherelement 26 für elektrische Energie, bei dem es sich beispielsweise um eine aufladbare Batterie bzw. einen Akkumulator handeln kann. Es versteht sich, dass auch andere Speicherelemente möglich sind, beispielsweise ein Kondensator oder eine Reddox-Flow-Zelle. Ferner versteht sich, dass anstelle der Speicherelemente 26 auch Energieumwandlungselemente zum Einsatz kommen können, beispielsweise Solarzellen, Brennstoffzellen oder Thermoelemente, ohne dass dies bei der Beschreibung der konkreten Ausführungsformen der Module 14, die im Wesentlichen die unterschiedlichen Schalttopologien aufzeigen soll, darauf im Einzelnen hingewiesen wird.

Das Modul 14 von Fig. 7 umfasst neun Schalter 28, die in der gezeigten Ausführungsform durch einen MOSFET 30 und eine Freilaufdiode 32 gebildet werden. Es versteht sich jedoch, dass auch andere Schalter zur Anwendung kommen können, insbesondere IGBTs, IGCTs oder Thyristoren. In den nachstehenden Abbildungen werden daher die Schalter durch ein generisches Symbol repräsentiert, wobei sich versteht, dass alle diese Möglichkeiten zur Anwendung kommen können.

Das Modul 14 von Fig. 7 ist operativ mit einer Steuerungseinrichtung (in Fig. 7 nicht gezeigt), die der Steuerungseinrichtung 20 von Fig. 1 entspricht. Diese Steuerungseinrichtung empfängt Informationen bezüglich des aktuellen Ladezustandes des Speicherelementes 26 bzw. der aktuellen Leistung oder Spannung, falls anstelle des Speicherelements 26 ein Energieumwandlungselement vorhanden ist. Ferner ist diese Steuerung geeignet, die Schalter 28 des Moduls 14 anzusteuern und dadurch zu betätigen.

Das Modul 14 von Fig. 7 ist ein Vier-Quadranten-Modul, das in allen vier Quadranten der Strom-Spannungs-Ebene betrieben werden kann. Wenn zwei der in Fig. 7 gezeigten Module 14 hintereinandergeschaltet werden, so können die entsprechenden Speicherelemente 26 dieser benachbarten Module
- in Reihe mit gleicher Polarität,
- in Reihe mit entgegengesetzter Polarität,
- parallel mit gleicher Polarität, und
- parallel mit entgegengesetzter Polarität
geschaltet werden. Ferner kann das Speicherelement 26 deaktiviert werden, indem der Schalter 28, der an dem in der Darstellung von Fig. 7 oberen Pol des Speicherelementes 26 angrenzt, geöffnet wird.

Wenn eine Vielzahl von Modulen 14 gemäß Fig. 7 hintereinandergeschaltet ist, können die Speicherelemente 26 nicht nur benachbarter Module 14, sondern auch solcher Module 14, die durch ein oder mehrere deaktivierte Module 14 getrennt sind, wahlweise in Reihe und parallel geschaltet werden.

Fig. 8 zeigt die Hintereinanderschaltung einer Mehrzahl von Modulen 14 nach Fig. 7, bei denen die Kombination aus MOSFET 30 und Freilaufdiode 32 durch ein einfaches Schaltersymbol ersetzt wurde. Ferner wurde in der Hintereinanderschaltung ein einzelnes Modul 14 durch einen gestrichelten Kasten kenntlich gemacht.

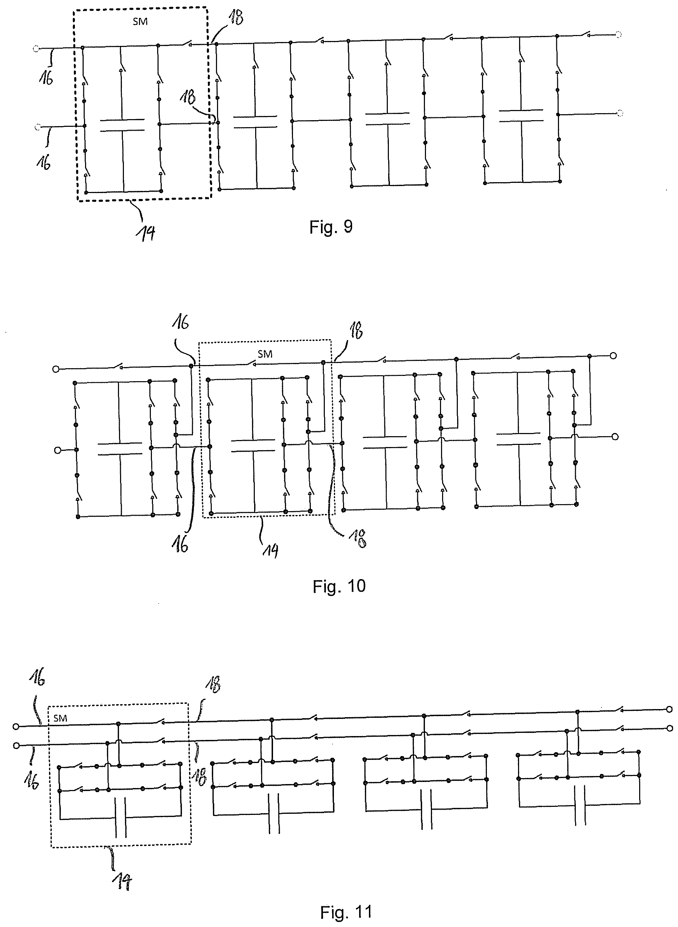

Fig. 9 zeigt eine Hintereinanderschaltung von Schaltmodulen 14 eines anderen Typs mit lediglich sechs Schaltern 28 pro Modul, wobei ein einzelnes Modul wiederum durch ein gestricheltes Kästchen gekennzeichnet ist. In dieser und den nachfolgenden Figuren werden die Bezugszeichen für die Schalter 28 und die Speicherelemente weggelassen, da sie für das Verständnis nicht benötigt werden.

Man beachte, dass der Begriff "Modul" 14 in der vorliegenden Offenbarung breit zu verstehen ist. In manchen Ausführungsformen werden die Module 14 zweckmäßigerweise separate Baugruppen sein, die miteinander kombiniert werden und einzeln ausgetauscht werden können. In anderen Ausführungsformen bestehen die Module jedoch lediglich aus Funktionseinheiten innerhalb einer Schaltung, ohne dass die Module baulich in irgendeiner Weise getrennt wären.

Das Modul 14 von Fig. 9 enthält ebenfalls einen Schalter, über den ein Pol des Speicherelements vom Rest des Moduls abgekoppelt werden kann, um damit das Speicherelement zu deaktivieren.

Fig. 10 und 11 zeigen zwei weitere Vier-Quadranten-Module 14 mit jeweils zwei ersten und zwei zweiten Anschlüssen 16, 18 mit sieben bzw. sechs Schaltern pro Modul 14. Bei den Modulen 14 von Fig. 10 und 11 lässt sich gleichfalls das Speicherelement deaktivieren, allerdings ist zu diesem Zweck kein Schalter vorgesehen, der unmittelbar an einen Pol des Speicherelements angrenzt.

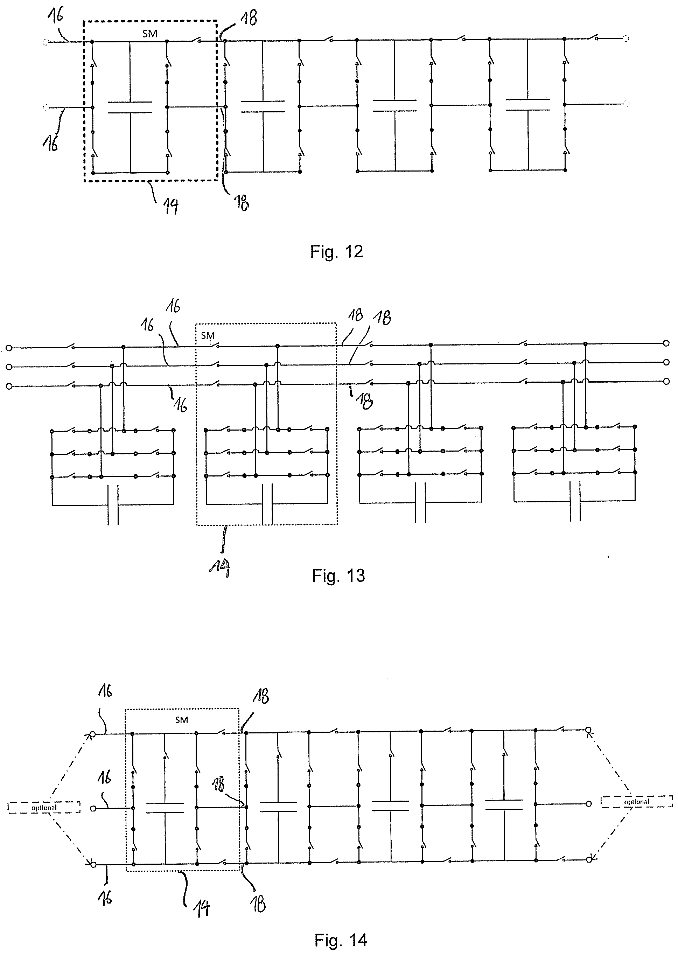

Schließlich zeigt. Fig. 12 eine Ausführungsform mit lediglich fünf Schaltern pro Modul 14. In der in Fig. 12 gezeigten Ausführung gestatten die Module 14 jedoch nicht die Parallelschaltung von zwei Modulen 14, die durch ein oder mehrere deaktivierte Module 14 getrennt sind. Fig. 12 weist jedoch auf die Möglichkeit hin, die Speicherelemente gegebenenfalls auf andere Art zu deaktivieren. Wenn es sich beispielsweise bei dem Speicherelement um eine Redox-Flow-Zelle handelt, kann diese deaktiviert werden, indem die Pumpe abgestellt wird. Auf diese Weise könnte also das Speicherelement gleichfalls durch Ansteuerung durch die Steuerungseinheit (nicht gezeigt) deaktiviert werden, jedoch nicht durch Schalten eines der hier explizit dargestellten Schalter.

### Vier-Quadranten-Module mit drei ersten und drei zweiten Anschlüssen

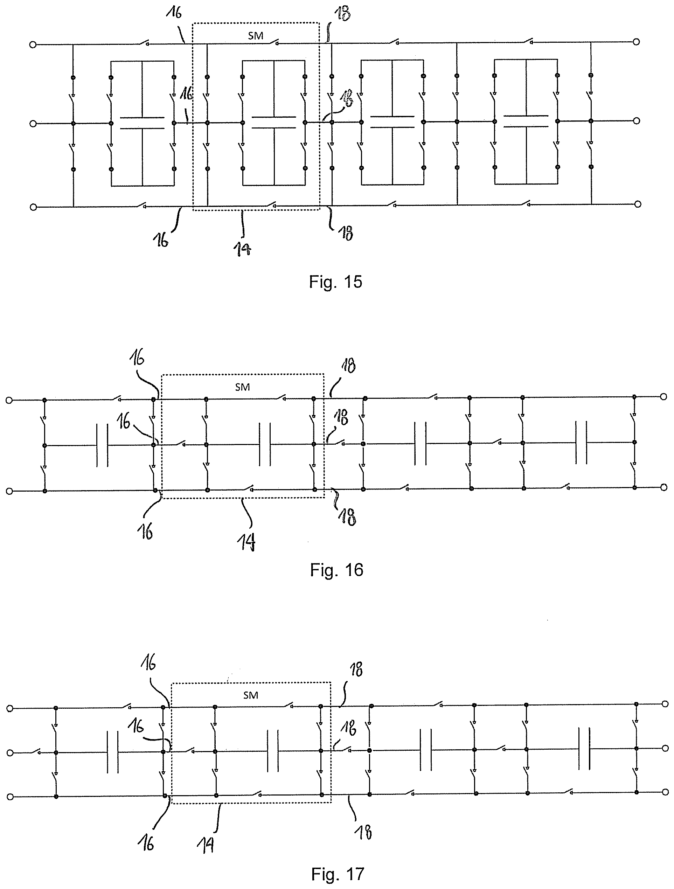

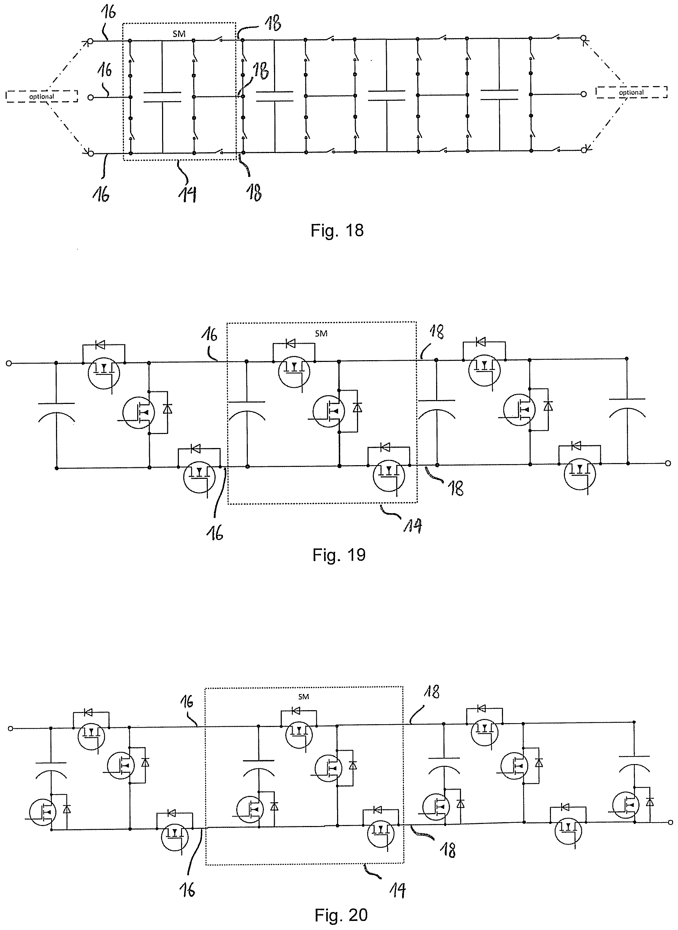

Fig. 13 - 18 zeigen Ausführungsformen von Vier-Quadranten-Modulen, die jeweils drei erste Anschlüsse 16 und drei zweite Anschlüsse 18 aufweisen. Eine Verallgemeinerung auf mehr als drei erste bzw. zweite Anschlüsse ist für den Fachmann in Anbetracht der hier vorgestellten Prinzipien möglich. Man beachte, dass das Modul 14 von Fig. 18, ähnlich wie dasjenige von Fig. 12 aufgrund der gezeigten Schalter 28 allein noch nicht in der Lage ist, Module 14, die durch ein oder mehrere deaktivierte Module 14 getrennt sind, parallel zu schalten. Die Module 14 von Fig. 16 und 17 sind an sich identisch, mit Ausnahme des ersten bzw. letzten Moduls der Kette.

### Zwei-Quadranten-Module

Fig. 19 und 20 zeigen Ausführungsbeispiele für Zwei-Quadranten-Module mit jeweils zwei ersten und zwei zweiten Anschlüssen 16, 18.

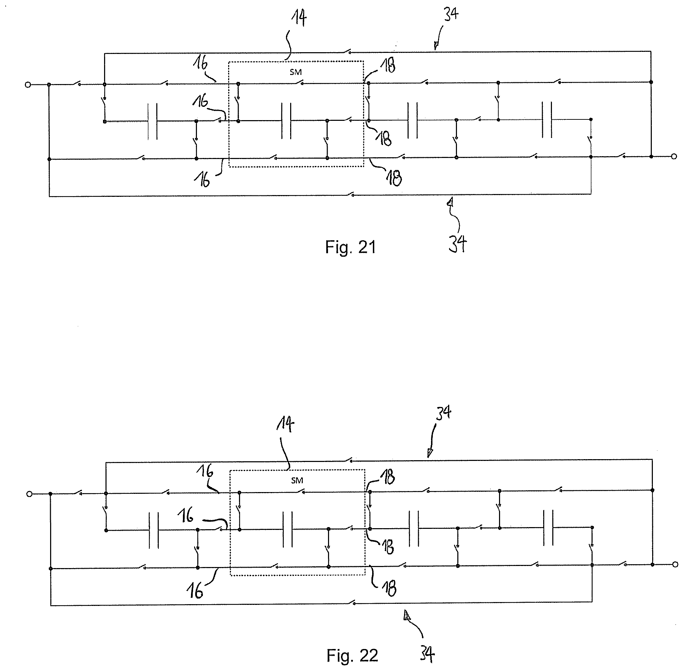

Fig. 21 und 22 zeigen Ausführungsbeispiele für Zwei-Quadranten-Module mit jeweils drei ersten und drei zweiten Anschlüssen 16, 18.

Um die volle Funktionalität des Energiespeicher-Direktumrichtersystems bereitzustellen kann eine Kette von Zwei-Quadranten-Modulen durch eine Zusatzschaltung 34, wie sie in Fig. 21 und 22 gezeigt ist, als Ganzes umgepolt werden.

### Betrieb des Energiespeicher-Direktumrichtersystems

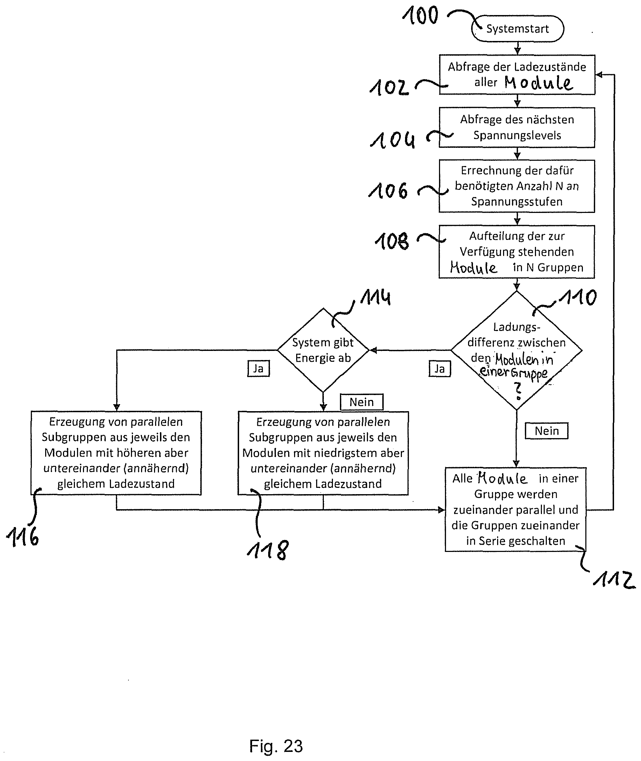

Fig. 23 zeigt ein Flussdiagramm, das den Betrieb des Systems nach einer Weiterbildung der Erfindung veranschaulicht.

Der Prozess beginnt mit dem Systemstart bei Schritt 100. Im nachfolgenden Schritt 102 fragt die Steuerungseinrichtung den Ladezustand aller Module 14 ab. Im nachfolgenden Schritt 104 wird der nächste benötigte Spannungslevel abgefragt. Im folgenden Schritt 106 berechnet die Steuereinrichtung 20 die zum Erreichen des Spannungslevels benötigte Anzahl N an Spannungsstufen. Wenn der Brückenzweig 12 beispielsweise aktuell eine Spannung von 23 V liefern soll und die Speicherelemente 26, z. B. Batteriezellen, eine Spannung von 5 V aufweisen, so würden zum Erreichen der Spannung N = 6 Spannungsstufen benötigt.

In Schritt 108 werden die zur Verfügung stehenden Module 14 in N Gruppen aufgeteilt.

Im Schritt 110 wird überprüft, ob zwischen den Speicherelementen 26 einer Gruppe eine Differenz bezüglich des Ladungszustandes vorliegt. Wenn dies nicht der Fall ist, schreitet der Prozess zum Schritt 112 voran, in dem alle Module 14 in einer Gruppe zueinander parallel und die Gruppen zueinander in Serie geschaltet werden. Der Prozess springt dann zurück zum Schritt 102 und der Prozess beginnt von neuem.

Falls in Schritt 110 festgestellt wird, dass die Speicherelemente 26 innerhalb einer Gruppe unterschiedliche Ladezustände aufweisen, wird im nachfolgenden Schritt 114 geprüft, ob das System Energie abgibt, sich also im Energieabgabemodus befindet. Falls dies der Fall ist, werden im nachfolgenden Schritt 116 innerhalb der Gruppe Subgruppen aus Modulen 14 gebildet, deren Speicherelemente 26 einen höheren, aber untereinander gleichen oder zumindest annähernd gleichen Ladezustand aufweisen. Im Extremfall kann diese Subgruppe auch aus einem einzigen Modul 14 gebildet werden. Dann schreitet der Prozess wiederum zum Schritt 112 voran, in dem die Module 14 zueinander parallel und die Gruppen zueinander in Serie geschaltet werden. Da sich das System hier im Energieabgabemodus befindet, werden die Speicherelemente 26 der parallel geschalteten Subgruppe entladen, während die Speicherelemente 26 der weiteren Module 14 der Gruppe deaktiviert sind und somit geschont werden, d.h. es findet eine Angleichung des Ladezustandes statt. Auf diese Weise führt der Prozess automatisch dazu, dass die Module 14 zu jedem Zeitpunkt ungefähr gleichmäßig geladen sind.

Falls in Schritt 114 festgestellt wird, dass das System keine Energie abgibt, sondern sich im Ladezustand befindet, werden in Schritt 118 Subgruppen aus solchen Modulen 14 gebildet, die den niedrigsten, aber untereinander zumindest annährend gleichen Ladezustand aufweisen, und diese werden dann in Schritt 112 parallel und mit den Modulen 14 der weiteren Gruppen in Reihe geschaltet. In diesem Fall werden also diejenigen Module 14, die den geringsten Ladezustand haben, beim Laden bevorzugt berücksichtigt, wodurch wiederum eine Angleichung des Ladezustandes erreicht wird.

Man erkennt, dass es für diesen Prozess wesentlich ist, dass einzelne Module 14 deaktiviert werden können, und dass Module 14, die durch ein oder mehrere deaktivierte Module 14 getrennt sind, wahlweise parallel (innerhalb einer Gruppe) und in Reihe (nämlich Module aus verschiedenen Gruppen) geschaltet werden können.

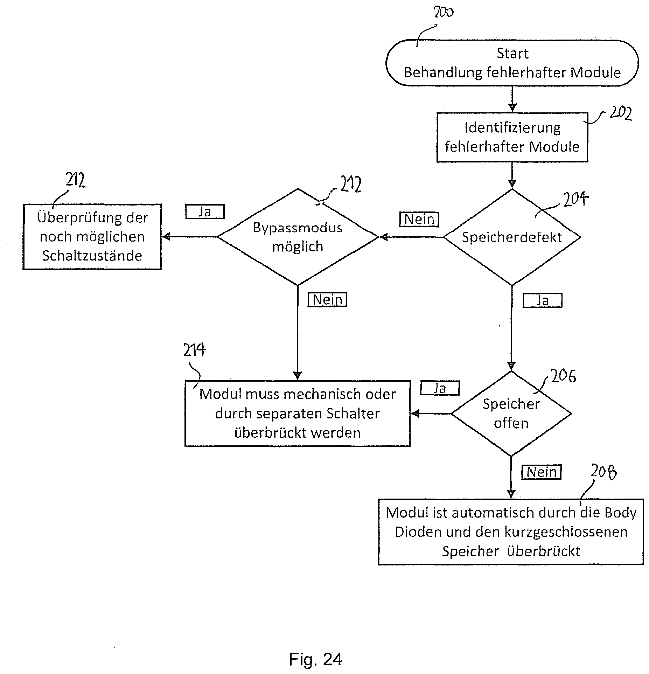

In Fig. 24 ist ein Flussdiagramm gezeigt, das die Behandlung fehlerhafter Module 14 illustriert. Der Prozess startet in Schritt 200. Im nachfolgenden Schritt 202 wird ein fehlerhaftes Modul 14 identifiziert. In Schritt 204 wird geprüft, ob der Fehler auf einem defekten Speicherelement 26 beruht. Falls dies der Fall ist, wird in Schritt 206 überprüft, ob das Speicherelement 26 "offen" ist, d.h. ob Strom durch das Speicherelement 26 fließen kann oder nicht. Falls das Speicherelement 26 nicht offen ist, bedeutet dies, dass das Modul 14 automatisch durch die Body-Dioden 32 und den kurzgeschlossenen Speicher 26 überbrückt ist (Schritt 208). Dies bedeutet, dass das Modul 14 zwar nicht mehr bei der Energieaufnahme oder Energieabgabe verwendet werden kann, dass es jedoch ebenso wenig den Betrieb der anderen Module 14 stört.

Falls in Schritt 204 festgestellt wird, dass der Fehler nicht in einem defekten Speicherelement 26 liegt, wird im Schritt 210 überprüft, ob ein Bypassmodus des Moduls 14 möglich ist. Falls dies der Fall ist, wird in Schritt 212 nur noch geprüft, welche Schaltzustände noch möglich sind. Falls ein Bypass jedoch nicht möglich ist, muss das Modul 14 entweder mechanisch oder durch einen separaten Schalter überbrückt werden (Schritt 214). Gleiches gilt, wenn in Schritt 206 festgestellt wird, dass der Fehler in der Tat auf einem defekten Speicherelement 26 beruht, das Speicherelement 26 jedoch "offen" ist.

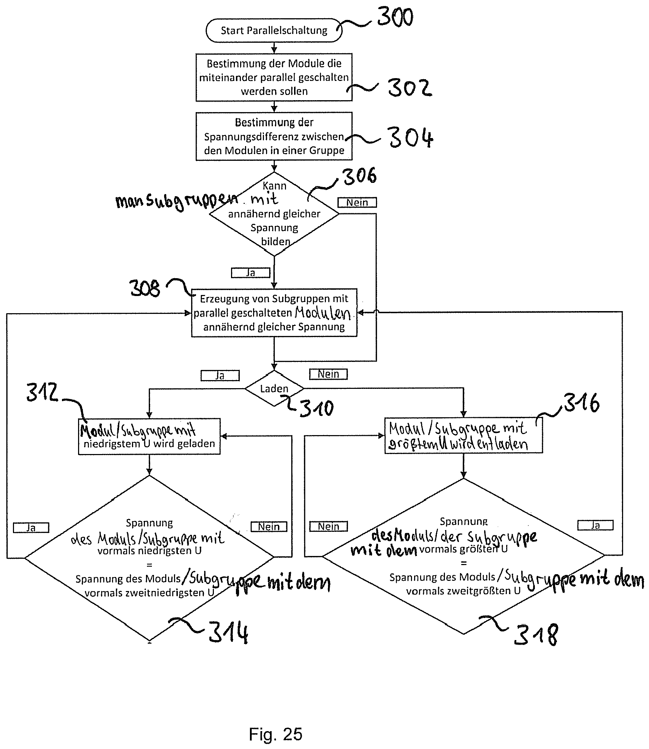

In Fig. 25 ist ein Flussdiagramm eines Prozesses veranschaulicht, der die Parallelschaltung von Modulen 14 steuert. Dieser Prozess ist dem Prozess von Fig. 23 konzeptionell ähnlich.

Der Prozess beginnt in Schritt 300. Im nachfolgenden Schritt 302 werden diejenigen Module 14 bestimmt, die miteinander parallel geschaltet werden sollen. Ähnlich wie in dem Prozess von Fig. 23 bilden solche Module 14, die parallel geschaltet werden sollen, eine Gruppe.

Im nachfolgenden Schritt 304 wird eine Spannungsdifferenz zwischen den Modulen 14 innerhalb der Gruppe bestimmt, und im nachfolgenden Schritt 306 wird bestimmt, ob man Gruppen mit annähernd gleicher Spannung bilden kann. Falls dies der Fall ist, werden in Schritt 308 Subgruppen mit parallel geschalteten Modulen 14 annähernd gleicher Spannung gebildet. Nachfolgend schreitet der Prozess zum Schritt 310 voran, in dem geprüft wird, ob sich das System in einem Lademodus befindet oder nicht. Falls im Schritt 306 festgestellt wurde, dass man keine Subgruppen mit annähernd gleicher Spannung bilden kann, fährt der Prozess ebenfalls mit dem Schritt 310 fort.

Wenn in Schritt 310 festgestellt wird, dass sich das System in einem Ladezustand befindet, wird in Schritt 312 das Modul 14 bzw. die Subgruppe mit der niedrigsten Spannung U oder mit dem niedrigsten Ladezustand geladen. Im nachfolgenden Schritt 314 wird geprüft, ob die Spannung des Moduls/der Subgruppe mit dem vormals niedrigsten U gleich der Spannung des Moduls bzw. der Subgruppe mit dem vormals zweitniedrigsten U ist. Falls dies nicht der Fall ist, kehrt der Prozess zum Schritt 312 zurück und das Modul 14 bzw. die Subgruppe mit der niedrigsten Spannung U wird weitergeladen. Auf diese Weise werden die Spannungen des Moduls 14/der Subgruppe mit der niedrigsten Spannung sukzessive auf das Niveau des Moduls 14/der Subgruppe mit der zweitniedrigsten Spannung angehoben, bis diese übereinstimmen. In diesem Fall kehrt der Prozess zum Schritt 308 zurück.

Falls im Schritt 310 festgestellt wird, dass sich das System nicht in einem Ladezustand, sondern im Energieabgabemodus befindet, werden die Schritte 316 und 318 durchlaufen, die spiegelbildlich zu den Schritten 312 und 314 sind und keiner weiteren Erläuterung bedürfen.

Man erkennt also, dass die Parallelschaltung so durchgeführt wird, dass im Ladezustand sukzessive Module 14 und Gruppen geringerer Spannung geladen werden, um die Spannungen anzugleichen. Sobald die Spannungen angeglichen sind, werden Module 14 oder Subgruppen parallel geschaltet. Auf diese Weise fließt beim Parallelschalten kein Strom zwischen den Modulen 14, wodurch Verluste gering gehalten werden. Man beachte, dass es sich bei dem beschriebenen Prozess um einen "Angleichprozess", keinen "Ausgleichprozess" zwischen Speicherelementen 26 handelt, der mit Verlusten behaftet wäre.

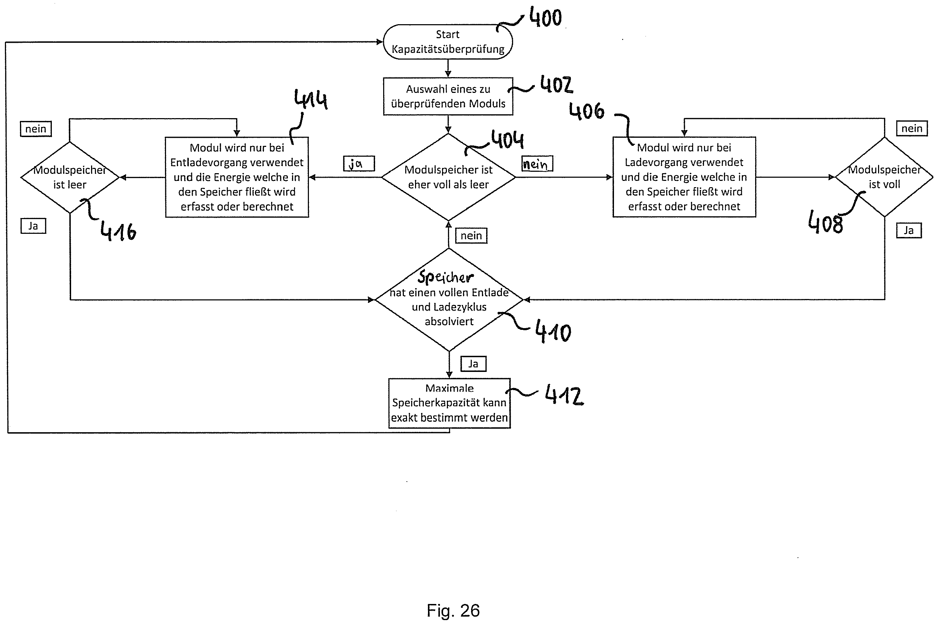

Schließlich zeigt Fig. 26 einen Prozess, in dem die Steuerungseinrichtung 20 die Kapazität eines Speicherelements 26 überprüft. Der Prozess beginnt bei Schritt 400. Im nachfolgenden Schritt 402 wird ein zu überprüfendes Modul 14 ausgewählt. Im Schritt 404 wird überprüft, ob das Speicherelement 26 des Moduls 14 eher voll als leer ist. Falls dies nicht der Fall ist, wird im folgenden Schritt 406 festgelegt, dass das betreffende Modul 14 nur noch bei Ladevorgängen, nicht aber bei Entladevorgängen verwendet wird und die Energie, welche in das Speicherelement 26 fließt, wird erfasst oder berechnet.

Nach jedem Ladevorgang wird in Schritt 408 geprüft, ob das Speicherelement 26 voll ist. Falls dies nicht der Fall ist, kehrt der Prozess zum Schritt 406 zurück, und das Speicherelement 26 des Moduls 14 wird weiter geladen. Sobald in Schritt 408 festgestellt wird, dass das Speicherelement 26 des betreffenden Moduls 14 voll ist, schreitet der Prozess zum Schritt 410 voran, in dem überprüft wird, ob das Speicherelement 26 einen vollen Entlade- und Ladezyklus absolviert hat. Wenn dies der Fall ist, schreitet der Prozess zum Schritt 412 voran, und die maximale Kapazität des Energiespeichers kann exakt bestimmt werden. Falls dies nicht der Fall ist, muss das Modul erst noch einen komplementären Entladevorgang durchlaufen, der durch die Schritte 414 und 416 erfolgt.

Die Schritte 414 und 416 sind das Gegenstück zu den Schritten 406 und 408 und benötigen keine weitere Erläuterung. Auf diese Weise ist es mit dem erfindungsgemäßen System 10 entweder nach den in Fig. 26 beschriebenen oder hierzu leicht abweichenden Schritten möglich, im laufenden Betrieb einzelne Energiespeicherelemente 26 vollständig zu laden oder zu entladen um deren Kapazität zu bestimmen. Insbesondere kann dabei sogar während eines Ladevorgangs des Energiespeicher-Direktumrichtersystems 10 ein einzelnes Speicherelement 26 entladen werden, in dem seine Ladung auf andere Speicherelemente übertragen wird. Umgekehrt kann auch während eines Entladevorgangs des Energiespeicher-Direktumrichtersystems 10 ein einzelnes Speicherelement 26 geladen werden, indem Ladung von anderen Speicherelementen 26 auf das einzelne Speicherelement 26 übertragen wird.

Wie aus der vorstehenden Beschreibung ersichtlich wird, stellt das Energiespeicher-Direktumrichtersystem der Erfindung ein System bereit, welche hocheffizient arbeitet, ein separates Ladungsmanagementsystem überflüssig macht und insbesondere bei Verwendung von chemischen Energiespeichern deren verwendbare Kapazität und Lebensdauer erhöht. Das System gestattet es, in einem Energieabgabemodus beliebige Spannungskurven zu erzeugen, sowohl netzsynchron als auch im Inselbetrieb. Umgekehrt kann elektrische Energie mit beliebiger Spannungskurve durch das System aufgenommen und in den genannten Speicherelementen gespeichert werden.

Dadurch, dass bei dem System der Erfindung die Funktionen eines Verbraucherumrichters, eines Ladeumrichters und eines üblichen Batteriemanagementsystems integral durch die schaltbaren Module und die zugehörige Steuerungseinrichtung bereitgestellt werden, kann der Wirkungsgrad des Systems gegenüber herkömmlichen Systemen erhöht werden.

Ein Ausbalancieren des Ladezustandes erfolgt vorzugsweise dadurch, dass Zellen mit höherem Ladezustand bevorzugt im Energieabgabemodus und Zellen mit geringem Ladezustand vorzugsweise im Ladeprozess eingebunden werden, ohne dass eine "Umladung" zwischen Speicherelementen nötig wäre.

Das System ermöglicht den Einsatz verschiedener Technologien in einem System, insbesondere die Kombination von unterschiedlichen Arten von Speicherelementen mit unterschiedlichen Arten von Energieumwandlungselementen.

Ferner gestattet das System den sogenannten "Second-Use" von ausgesonderten Zellen anderer Batteriesysteme, unabhängig von deren physikalischen oder elektrischen Eigenschaften und ohne zusätzliche elektrische Komponenten, wie DC/DC-Konverter und DC/DC-Zwischenkreis. Auch gestattet das System die einfache Kombination unterschiedlicher Batterietechnologien und die damit verbundene Summierung der individuellen Vorteile, z. B. schnell ladefähige Zellen mit geringer Kapazität kombiniert mit Zellen mit hoher Kapazität aber langer Ladezeit. Die Energiespeicher- oder Energiewandlerelemente können durch den modularen Aufbau einfach ausgetauscht werden, auch im laufenden Betrieb. Ebenso ist es möglich, ohne große Einschränkung der Funktionalität des Gesamtsystems einzelne Speicherelemente bzw. Energieumwandlungselemente durch die genannte Deaktivierung außer Betrieb zu nehmen.

Ferner ist das System durch seinen Aufbau außerordentlich redundant und ausfallssicher, und es kann aufgrund seines modularen Aufbaus im Grunde beliebig skaliert werden, sowohl hinsichtlich seiner Leistung als auch seiner Gesamtkapazität.

Ein weiterer Vorteil besteht darin, dass die Ströme und Spannungen der einzelnen Module 14 gering gehalten werden können, sodass nur Spannungen unterhalb der Schutzkleinspannung auftreten und damit die Bedingungen der Schutzklasse III erfüllt werden können.. Dadurch wird die Gefahr eines Stromunfalls vermieden, wodurch die Sicherheit des Anwenders und des Wartungspersonals entscheidend verbessert wird.

Bei Anwendungen in der Elektromobilität vereinigt das System die Funktionalität einer herkömmlichen Batterie, eines Umrichters für den Motor und eines Ladeumrichters. Zudem ist das System ohne Mehraufwand durch seine freie Konfigurierbarkeit und hohe Anzahl an Freiheitsgraden zu allen Ladestromquellen kompatibel. Selbst ein DC-Schnellladevorgang schadet der Lebensdauer der Batterie bzw. Akkumulatoren - im Gegensatz zu aktuellen Systemen - nicht oder nur minimal.

Schließlich kann das System direkt Wechselspannung oder Drehstrom aufnehmen bzw. abgeben und so direkt mit einer elektrischen Maschine oder einem Wechselstromübertragungs- oder Hausnetz verbunden werden.

Ferner betrifft die vorliegende Erfindung Gegenstände, die in den folgenden Beispielen offenbart sind:
1. Modulares Energiespeicher-Direktumrichtersystem (10), das Folgendes umfasst:
   mindestens einen Brückenzweig (12), der eine Mehrzahl von hintereinander geschalteten Modulen (14) umfasst,
      wobei jedes der genannten Module (14)
      - mindestens zwei erste Anschlüsse (16) und mindestens zwei zweite Anschlüsse,
      - ein Speicherelement (26) für elektrische Energie, insbesondere eine Batterie, oder ein Energieumwandlungselement, und
      - eine Mehrzahl von Schaltern (28) umfasst,
      wobei bei jeweils zwei benachbarten Modulen (14) aus den genannten Modulen (14) die ersten Anschlüsse (16) des einen Moduls direkt oder über eine dazwischen geschaltete Komponente mit den zweiten Anschlüssen (18) des anderen Moduls (14) verbunden sind, und
   eine Steuereinrichtung (20), die
      - dazu eingerichtet ist, Informationen bezüglich des aktuellen Ladezustandes der Speicherelemente (26) bzw. Spannung oder Leistung der Energieumwandlungselemente zu erhalten, und
      - die geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Energieabgabemodus derart anzusteuern, dass der Brückenzweig (12) als Ganzes eine gewünschte Spannung oder eine Phase einer gewünschten Spannung liefert,
   wobei die genannten Module (14) so ausgelegt und ansteuerbar sind, dass
      - das Speicherelement (26) bzw. Energieumwandlungselement eines Moduls (14) wahlweise deaktiviert werden kann, und
      - dass die Speicherelemente (26) bzw. Energieumwandlungselemente von zwei Modulen (14), die durch mindestens ein dazwischenliegendes Modul (14) mit deaktiviertem Speicherelement (26)/Energieumwandlungselement getrennt sind, wahlweise parallel und in Reihe schaltbar sind.
2. Energiespeicher-Direktumrichtersystem (10) nach Beispiel 1, bei dem die Steuereinrichtung (20) geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Lademodus anzusteuern, um zumindest einen Teil der Speicherelemente (26) durch eine externe am Brückenzweig (12) anliegende AC- oder DC-Spannung aufzuladen.
3. Energiespeicher-Direktumrichtersystem (10) nach Beispiel 1, bei dem das Speicherelement (26)/Energieumwandlungselement eines Moduls (14) zwei Pole hat, und bei dem das Speicherelement/Energieumwandlungselement (26) durch eine Stellung der Schalter (28) des betreffenden Moduls (26), in der mindestens einer der Pole des Speicherelements (26)/Energieumwandlungselements mit keinem der ersten und zweiten Anschlüsse (16, 18) verbunden ist, deaktivierbar ist.
4. Energiespeicher-Direktumrichtersystem (10) nach Beispiel 3, bei dem einer der Pole des Speicherelements (26)/Energieumwandlungselements durch einen zugehörigen Schalter (28) vom Rest des Moduls (14) abkoppelbar ist.
5. Energiespeicher-Direktumrichtersystem (10) nach einem der vorhergehenden Beispiele, bei dem die Module (14) in allen vier Quadranten der Strom-Spannungsebene betrieben werden können.
6. Energiespeicher-Direktumrichtersystem (10) nach Beispiel 5, bei dem die Module (14) so ausgelegt und ansteuerbar sind, dass die Speicherelemente (26)/Energieumwandlungselemente zweier benachbarter Module (14)
   - in Reihe mit gleicher Polarität,
   - in Reihe mit entgegengesetzter Polarität,
   - parallel mit gleicher Polarität, und
   - parallel mit entgegengesetzter Polarität
   geschaltet werden können.
7. Energiespeicher-Direktumrichtersystem (10), bei dem die Module (14) nur in zwei Quadranten der Strom-Spannungsebene betrieben werden können, und bei dem eine Zusatzschaltung (34) vorgesehen ist, durch die eine Kette von hintereinander geschalteten Zwei-Quadrantenmodulen (14) als Ganzes umgepolt werden kann.
8. Energiespeicher-Direktumrichtersystem (10) nach einem der Beispiele 5 bis 7, bei dem die genannten Vier-Quadrantenmodule (14) zumindest teilweise durch eine umpolbare Kette von mindestens zwei Zwei-Quadrantenmodulen gebildet sind.
9. Energiespeicher-Direktumrichtersystem (10) nach einem der vorhergehenden Beispiele, bei dem die genannten Module (14) drei oder mehr erste und zweite Anschlüsse (16, 18) haben.
10. Energiespeicher-Direktumrichtersystem (10) nach einem der vorhergehenden Beispiele, bei dem die mindestens zwei äußeren Anschlüsse (16, 18) in dem ersten und/oder letzten Modul des Brückenzweiges miteinander verbunden sind.
11. Energiespeicher-Direktumrichtersystem (10) nach einem der vorhergehenden Beispiele, welches zwei, drei, vier, fünf oder mehr Brückenzweige (12) enthält.
12. Energiespeicher-Direktumrichtersystem (10) nach einem der vorhergehenden Beispiele, bei dem die mindestens zwei äußeren Anschlüsse (16, 18) im ersten und/oder letzten Modul (14) eines Brückenzweiges (12) separat mit mindestens zwei äußeren Anschlüssen (16, 18) eines Moduls (14) eines angrenzenden Brückenzweiges (12) verbunden sind.
13. Energiespeicher-Direktumrichtersystem (10) nach einem der Beispiele 11 oder 12, bei dem die genannten zwei, drei, vier, fünf oder mehr Brückenzweige (12) in einer Sterntopologie oder in einer Ringtopologie miteinander verschaltet sind.
14. Energiespeicher-Direktumrichtersystem (10) nach Beispielen 12 und 13, bei dem die zwei, drei, vier, fünf oder mehr Brückenzweige (12) derart in einer Ringtopologie verschaltet sind, dass die mindestens zwei äußeren Anschlüsse (16, 18) eines jeden Brückenzweiges (12) separat mit den mindestens zwei äußeren Anschlüssen (16, 18) des angrenzenden Brückenzweiges (12) verbunden sind,
   und bei dem die Steuereinrichtung (20) dazu eingerichtet ist, zumindest einen Teil der genannten Mehrzahl von Schaltern (28) so anzusteuern, dass mindestens zwei voneinander unabhängige Ringströme durch den Ring aus Brückenzweigen (12) fließen können.
15. Energiespeicher-Direktumrichtersystem (10) nach einem der vorhergehenden Beispiele, bei dem innerhalb des mindestens einen Brückenzweiges (12), insbesondere innerhalb eines Moduls oder zwischen benachbarten Modulen, Induktivitäten (24) vorgesehen sind.
16. Energiespeicher-Direktumrichtersystem (10) nach einem der vorhergehenden Beispiele, bei dem die Schalter (28) zumindest überwiegend durch MOS-FETs (30), IGBTs, IGCTs oder Thyristoren gebildet sind.
17. Energiespeicher-Direktumrichtersystem (10) nach einem der vorhergehenden Beispiele, bei dem die Speicherelemente (26) durch eines oder mehrere der folgenden Elemente gebildet sind:
   - einen Kondensator,
   - eine Batteriezelle, insbesondere eine Second-Use-Zelle,
   - eine Redox-Flowzelle.
18. Energiespeicher-Direktumwandlersystem (10) nach einem der vorhergehenden Beispiele, bei dem die Energiewandlungselemente durch Solarzellen, Brennstoffzellen oder Thermoelemente gebildet sind.
19. Energiespeicher-Direktumrichtersystem (10) nach einem der vorhergehenden Beispiele, bei dem zumindest ein Teil der genannten Module (14) ein Speicherelement (26) und zumindest ein Teil der Module (14) ein Energiewandlungselement umfasst.
20. Energiespeicher-Direktumrichtersystem (10) nach einem der vorhergehenden Beispiele, bei dem ein Teil der Module (14) Speicherelemente (26) eines ersten Typs und ein anderer Teil der Module (14) Speicherelemente (26) eines zweiten Typs umfasst, der von dem ersten Typ verschieden ist, wobei sich der erste Typ und der zweite Typ, insbesondere in einem oder mehreren der folgenden Merkmale unterscheiden:
   - Ladezeit,
   - Innenwiderstand,
   - Kapazität.
21. Energiespeicher-Direktumrichtersystem (10) nach einem der vorhergehenden Beispiele, bei dem zumindest ein Teil der Module sowohl ein Speicherelement als auch ein Energieumwandlungselement enthält.
22. Energiespeicher-Direktumrichtersystem (10) nach einem der vorhergehenden Beispiele, wobei die Steuereinrichtung (20) geeignet ist, Gruppen von Modulen (14) zu bestimmen, deren Speicherelemente (26) parallel zu schalten sind,
   wobei die Steuereinrichtung dazu eingerichtet ist, zumindest einen Teil der genannten Mehrzahl von Schaltern (28) in Abhängigkeit von dem aktuellen Ladezustand der Speicherelemente (26) derart anzusteuern, dass vor dem Parallelschalten der Module (14) der Gruppe die Spannungen oder Ladezustände der Module angeglichen werden, indem
   - während eines Ladevorgangs Module (14), oder Moduluntergruppen, die eine geringere Spannung bzw. einen geringeren Ladezustand aufweisen, bevorzugt geladen werden, und/oder
   - während eines Energieabgabemodus Module (14) oder Moduluntergruppen, die eine hohe Spannung bzw. einen hohen Ladezustand aufweisen, bevorzugt entladen werden.
23. Energiespeicher-Direktumrichtersystem (10) nach einem der vorhergehenden Beispiele, bei dem die Steuerschaltung (20) dazu eingerichtet ist, die Kapazität des Speicherelements (26) eines Moduls (14) zu bestimmen, indem das Speicherelement (26) im laufenden Betrieb des Systems vollständig geladen und vollständig entladen wird und die Energie, welche in bzw. aus dem Speicherelement (26) fließt, erfasst wird.
24. Energiespeicher-Direktumrichtersystem (10) nach einem der vorhergehenden Beispiele, bei dem die Steuereinrichtung (20) geeignet ist, fehlerhafte Module durch Überprüfung zu identifizieren, wobei die Überprüfung eines oder mehrere der folgenden Kriterien beinhaltet:
   - Ist das Speicherelement defekt?
   - Ist das Speicherelement kurzgeschlossen oder offen?
   - Ist ein Bypassmodus möglich?
   - Welche Schaltzustände sind noch möglich?
25. Energiespeicher-Direktumrichtersystem (10) nach einem der vorhergehenden Beispiele, bei dem die Steuereinrichtung (20) dazu eingerichtet ist, zumindest einen Teil der Schalter (28) derart anzusteuern, dass das System eine Netzspannung, insbesondere ein drei-phasige Netzspannung von 1000 V oder weniger, vorzugsweise von ungefähr 400 V ausgibt.
26. Elektrischer Antrieb für ein Fahrzeug, umfassend ein modulares Energiespeicher-Direktumrichtersystem (10) nach einem der vorhergehenden Beispiele.
27. Verfahren zum Herstellen eines modularen Energiespeicher-Direktumrichtersystems (10), insbesondere eines Energiespeicher-Direktumrichtersystems (10) nach einem der Beispiele 1 - 26, das folgendes umfasst:
   Bereitstellen mindestens eines Brückenzweiges (12), der eine Mehrzahl von hintereinandergeschalteten Modulen (14) umfasst, wobei jedes der genannten Module (14)
      - mindestens zwei erste Anschlüsse (16) und mindestens zwei zweite Anschlüsse (18),
      - ein Speicherelement (26) für elektrische Energie, insbesondere eine Batterie, oder ein Energieumwandlungselement, und
      - eine Mehrzahl von Schaltern (28) umfasst,
   wobei bei jeweils zwei benachbarten Modulen (14) aus den genannten Modulen (14) die ersten Anschlüsse (16) des einen Moduls direkt oder über eine dazwischen geschaltete Komponente mit den zweiten Anschlüssen (18) des anderen Moduls (14) verbunden sind,
   Bereitstellen einer Steuereinrichtung (20), die
      - dazu eingerichtet ist, Informationen bezüglich des aktuellen Ladezustandes der Speicherelemente (26) bzw. Spannung oder Leistung der Energieumwandlungselemente zu erhalten, und
      - die geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Energieabgabemodus derart anzusteuern, dass der Brückenzweig (12) als Ganzes eine gewünschte Spannung oder eine Phase einer gewünschten Spannung liefert,
   wobei die genannten Module (14) so ausgelegt und ansteuerbar sind, dass
      - das Speicherelement (26) bzw. Energieumwandlungselement eines Moduls (14) wahlweise deaktiviert werden kann, und
      - dass die Speicherelemente (26) bzw. Energieumwandlungselemente von zwei Modulen (14), die durch mindestens ein dazwischenliegendes Modul (14) mit deaktiviertem Speicherelement (26)/Energieumwandlungselement getrennt sind, wahlweise parallel und in Reihe schaltbar sind.
28. Verfahren nach Beispiel 27, bei dem für die Speicherelemente (26) Second-Use-Batteriezellen verwendet werden.
29. Verfahren zum Bereitstellen einer gewünschten Spannung oder einer Phase einer gewünschten Spannung, das folgendes umfasst:
   Empfangen von Informationen bezüglich des aktuellen Ladezustandes von Speicherelementen (26) bzw. der Spannung oder Leistung von Energieumwandlungselementen, die in einer Mehrzahl von hintereinander geschalteten Modulen (14) enthalten sind, wobei jedes der genannten Module (14)
      - mindestens zwei erste Anschlüsse (16) und mindestens zwei zweite Anschlüsse (18),
      - ein Speicherelement (26) für elektrische Energie, insbesondere eine Batterie, oder ein Energieumwandlungselement, und
      - eine Mehrzahl von Schaltern (28) umfasst,
   wobei bei jeweils zwei benachbarten Modulen (14) aus den genannten Modulen die ersten Anschlüsse (16) des einen Moduls (14) direkt oder über eine dazwischen geschaltete Komponente mit den zweiten Anschlüssen (18) des anderen Moduls (14) verbunden sind,
   Ansteuern zumindest eines Teils der genannten Mehrzahl von Schaltern (28) in Abhängigkeit von dem aktuellen Ladezustand der Speicherelemente (26), bzw. der aktuellen Leistung der Spannung der Energieumwandlungselemente derart, dass ein Brückenzweig (12), der eine Mehrzahl von derartigen hintereinandergeschalteten Modulen (14) umfasst, als Ganzes eine gewünschte Spannung oder eine Phase einer gewünschten Spannung liefert,
   wobei mindestens ein Speicherelement (26) bzw. Energieumwandlungselement eines Moduls deaktiviert wird, und
      - die Speicherelemente (26) bzw. Energieumwandlungselemente von zwei Modulen (14), die durch mindestens ein dazwischenliegendes Modul (14) mit deaktiviertem Speicherelement/Energieumwandlungselement getrennt sind, parallel oder in Reihe geschaltet werden.
30. Verfahren nach Beispiel 29, welches zum Betrieb eines modularen Energiespeicher-Direktumrichtersystems (10) nach einem der Beispiele 1 bis 26 ausgeführt wird.
31. Verfahren nach einem der Beispiele 29 oder 30, mit den folgenden Schritten:
   Bestimmen von Gruppen von Modulen (14), deren Speicherelemente (26) parallel zu schalten sind, und
   Angleichen der Spannungen oder Ladezustände der Module innerhalb der Gruppe, vor dem Parallelschalten der Module (14) der Gruppe, indem
      - während eines Ladevorgangs Module (14) oder Moduluntergruppen, die eine geringere Spannung bzw. einen geringeren Ladezustand aufweisen, bevorzugt geladen werden, und/oder
      - während eines Energieabgabemodus Module (14) oder Moduluntergruppen, die eine hohe Spannung bzw. einen hohen Ladezustand aufweisen, bevorzugt entladen werden.
32. Verfahren nach einem der Beispiele 29 bis 31, bei dem ferner die Kapazität des Speicherelements (26) eines Moduls (14) bestimmt wird, indem das Speicherelement (26) im laufenden Betrieb des Systems (10) vollständig geladen und vollständig entladen wird und die Energie, welche in oder aus dem Speicherelement (26) fließt, erfasst wird.
33. Verfahren nach einem der Beispiele 29 - 32, bei dem fehlerhafte Module (14) identifiziert werden, indem eines oder mehrere der folgenden Kriterien überprüft werden:
   - Ist das Speicherelement defekt?
   - Ist das Speicherelement kurzgeschlossen oder offen?
   - Ist ein Bypassmodus möglich?
   - Welche Schaltzustände sind noch möglich?

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### BEZUGSZEICHENLISTE

- 10: Energiewandler-Direktumrichtersystem
- 12: Brückenzweig
- 14: Modul
- 16: erster Eingang
- 18: zweiter Eingang
- 20: Steuereinrichtung
- 22: äußerer Anschluss
- 24: Induktivität
- 26: Speicherelement
- 28: Schalter
- 30: MOSFET
- 32: Freilaufdiode
- 34: Umpolungsschaltung

## Patentansprüche

1. Verwendung von Second-Use-Batteriezellen, die für andere Anwendungen bereits ausgesondert wurden, zum Aufbauen oder Ergänzen eines modularen Energiespeicher-Direktumrichtersystems (10), das Folgendes umfasst:
mindestens einen Brückenzweig (12), der eine Mehrzahl von hintereinander geschalteten Modulen (14) umfasst,
wobei jedes der genannten Module (14)
- mindestens zwei erste Anschlüsse (16) und mindestens zwei zweite Anschlüsse,
- ein Speicherelement (26) für elektrische Energie, insbesondere eine Batterie, oder ein Energieumwandlungselement, und
- eine Mehrzahl von Schaltern (28) umfasst,
wobei bei jeweils zwei benachbarten Modulen (14) aus den genannten Modulen (14) die ersten Anschlüsse (16) des einen Moduls direkt oder über eine dazwischen geschaltete Komponente mit den zweiten Anschlüssen (18) des anderen Moduls (14) verbunden sind, und
eine Steuereinrichtung (20), die
- dazu eingerichtet ist, Informationen bezüglich des aktuellen Ladezustandes der Speicherelemente (26) bzw. Spannung oder Leistung der Energieumwandlungselemente zu erhalten, und
- die geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Energieabgabemodus derart anzusteuern, dass der Brückenzweig (12) als Ganzes eine gewünschte Spannung oder eine Phase einer gewünschten Spannung liefert,
wobei die genannten Module (14) so ausgelegt und ansteuerbar sind, dass
- das Speicherelement (26) bzw. Energieumwandlungselement eines Moduls (14) wahlweise deaktiviert werden kann, und
- dass die Speicherelemente (26) bzw. Energieumwandlungselemente von zwei Modulen (14), die durch mindestens ein dazwischenliegendes Modul (14) mit deaktiviertem Speicherelement (26)/Energieumwandlungselement getrennt sind, wahlweise parallel und in Reihe schaltbar sind, wobei zumindest für einen Teil der Speicherelemente (26) die genannten Second-Use-Batteriezellen verwendet werden.

2. Verwendung von Second-Use-Batterien Zellen nach Anspruch 1, bei dem das Energiespeicher-Direktumrichtersystem (10) ein System nach einem der Ansprüche 5 bis 13 ist, und insbesondere einen stationären Energiespeicher für regenerative Energien bildet.

3. Verfahren zum Herstellen eines modularen Energiespeicher-Direktumrichtersystems (10), unter Verwendung von Batteriezellen, die für andere Anwendungen bereits ausgesondert wurden, wobei das Verfahren folgendes umfasst:
Bereitstellen mindestens eines Brückenzweiges (12), der eine Mehrzahl von hintereinandergeschalteten Modulen (14) umfasst, wobei jedes der genannten Module (14)
- mindestens zwei erste Anschlüsse (16) und mindestens zwei zweite Anschlüsse (18),
- ein Speicherelement (26) für elektrische Energie, insbesondere eine Batterie, oder ein Energieumwandlungselement, und
- eine Mehrzahl von Schaltern (28) umfasst,
wobei zumindest für einen Teil der Speicherelemente (26) die genannten Second-Use-Batterien Zellen verwendet werden,
wobei bei jeweils zwei benachbarten Modulen (14) aus den genannten Modulen (14) die ersten Anschlüsse (16) des einen Moduls direkt oder über eine dazwischen geschaltete Komponente mit den zweiten Anschlüssen (18) des anderen Moduls (14) verbunden sind,
Bereitstellen einer Steuereinrichtung (20), die
- dazu eingerichtet ist, Informationen bezüglich des aktuellen Ladezustandes der Speicherelemente (26) bzw. Spannung oder Leistung der Energieumwandlungselemente zu erhalten, und
- die geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Energieabgabemodus derart anzusteuern, dass der Brückenzweig (12) als Ganzes eine gewünschte Spannung oder eine Phase einer gewünschten Spannung liefert,
wobei die genannten Module (14) so ausgelegt und ansteuerbar sind, dass
- das Speicherelement (26) bzw. Energieumwandlungselement eines Moduls (14) wahlweise deaktiviert werden kann, und
- dass die Speicherelemente (26) bzw. Energieumwandlungselemente von zwei Modulen (14), die durch mindestens ein dazwischenliegendes Modul (14) mit deaktiviertem Speicherelement (26)/Energieumwandlungselement getrennt sind, wahlweise parallel und in Reihe schaltbar sind.

4. Verfahren nach Anspruch 3, bei dem das Energiespeicher-Direktumrichtersystem (10) ein System nach einem der Ansprüche 5 bis 13 ist, und insbesondere einen stationären Energiespeicher für regenerative Energien bildet.

5. Modulares Energiespeicher-Direktumrichtersystem (10), das Folgendes umfasst:
mindestens einen Brückenzweig (12), der eine Mehrzahl von hintereinander geschalteten Modulen (14) umfasst,
wobei jedes der genannten Module (14)
- mindestens zwei erste Anschlüsse (16) und mindestens zwei zweite Anschlüsse,
- ein Speicherelement (26) für elektrische Energie, insbesondere eine Batterie, oder ein Energieumwandlungselement, und
- eine Mehrzahl von Schaltern (28) umfasst,
wobei bei jeweils zwei benachbarten Modulen (14) aus den genannten Modulen (14) die ersten Anschlüsse (16) des einen Moduls direkt oder über eine dazwischen geschaltete Komponente mit den zweiten Anschlüssen (18) des anderen Moduls (14) verbunden sind, und
eine Steuereinrichtung (20), die
- dazu eingerichtet ist, Informationen bezüglich des aktuellen Ladezustandes der Speicherelemente (26) bzw. Spannung oder Leistung der Energieumwandlungselemente zu erhalten, und
- die geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Energieabgabemodus derart anzusteuern, dass der Brückenzweig (12) als Ganzes eine gewünschte Spannung oder eine Phase einer gewünschten Spannung liefert,
wobei die genannten Module (14) so ausgelegt und ansteuerbar sind, dass
- das Speicherelement (26) bzw. Energieumwandlungselement eines Moduls (14) wahlweise deaktiviert werden kann, und
- dass die Speicherelemente (26) bzw. Energieumwandlungselemente von zwei Modulen (14), die durch mindestens ein dazwischenliegendes Modul (14) mit deaktiviertem Speicherelement (26)/Energieumwandlungselement getrennt sind, wahlweise parallel und in Reihe schaltbar sind, wobei zumindest ein Teil der Speicherelemente (26) durch Second-Use-Batteriezellen gebildet sind, die für andere Anwendungen bereits ausgesondert wurden.

6. Energiespeicher-Direktumrichtersystem (10) nach Anspruch 5, bei dem ein Teil der Module (14) Speicherelemente (26) eines ersten Typs bzw. Alterungsgrades und ein anderer Teil der Module (14) Speicherelemente (26) eines zweiten Typs bzw. Alterungsgrades umfasst, der von dem ersten Typ bzw. Alterungsgrad verschieden ist, wobei sich der erste Typ/Alterungsgrad und der zweite Typ/Alterungsgrad, insbesondere in einem oder mehreren der folgenden Merkmale unterscheiden:
- Ladezeit,
- Innenwiderstand,
- Kapazität.

7. Energiespeicher-Direktumrichtersystem (10) nach einem der Ansprüche 5 oder 6, bei dem das System einen stationären Energiespeicher für regenerative Energien bildet.

8. Energiespeicher-Direktumrichtersystem (10) nach einem der Ansprüche 5 bis 7, bei dem die Steuereinrichtung (20) geeignet ist, fehlerhafte Module durch Überprüfung zu identifizieren, wobei die Überprüfung eines oder mehrere der folgenden Kriterien beinhaltet:
- Ist das Speicherelement defekt?
- Ist das Speicherelement kurzgeschlossen oder offen?
- Ist ein Bypassmodus möglich?
- Welche Schaltzustände sind noch möglich?

9. Energiespeicher-Direktumrichtersystem (10) nach einem der Ansprüche 5 bis 8, bei dem die Steuerschaltung (20) dazu eingerichtet ist, die Kapazität des Speicherelements (26) eines Moduls (14) zu bestimmen, indem das Speicherelement (26) im laufenden Betrieb des Systems vollständig geladen und vollständig entladen wird und die Energie, welche in bzw. aus dem Speicherelement (26) fließt, erfasst wird, und/oder bei dem die Steuereinrichtung (20) dazu eingerichtet ist, zumindest einen Teil der Schalter (28) derart anzusteuern, dass das System eine Netzspannung, insbesondere ein drei-phasige Netzspannung von 1000 V oder weniger, vorzugsweise von ungefähr 400 V ausgibt.

10. Energiespeicher-Direktumrichtersystem (10) nach einem der Ansprüche 5 bis 9, bei dem die Steuereinrichtung (20) geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Lademodus anzusteuern, um zumindest einen Teil der Speicherelemente (26) durch eine externe am Brückenzweig (12) anliegende AC- oder DC-Spannung aufzuladen, und/oder bei dem das Speicherelement (26)/Energieumwandlungselement eines Moduls (14) zwei Pole hat, und bei dem das Speicherelement/Energieumwandlungselement (26) durch eine Stellung der Schalter (28) des betreffenden Moduls (26), in der mindestens einer der Pole des Speicherelements (26)/Energieumwandlungselements mit keinem der ersten und zweiten Anschlüsse (16, 18) verbunden ist, deaktivierbar ist, wobei vorzugsweise einer der Pole des Speicherelements (26)/Energieumwandlungselements durch einen zugehörigen Schalter (28) vom Rest des Moduls (14) abkoppelbar ist.

11. Energiespeicher-Direktumrichtersystem (10) nach einem der Ansprüche 5 bis 10, bei dem die Module (14) in allen vier Quadranten der Strom-Spannungsebene betrieben werden können, wobei die Module (14) vorzugsweise so ausgelegt und ansteuerbar sind, dass die Speicherelemente (26)/Energieumwandlungselemente zweier benachbarter Module (14)
- in Reihe mit gleicher Polarität,
- in Reihe mit entgegengesetzter Polarität,
- parallel mit gleicher Polarität, und
- parallel mit entgegengesetzter Polarität
geschaltet werden können, oder bei dem die Module (14) nur in zwei Quadranten der Strom-Spannungsebene betrieben werden können, und bei dem eine Zusatzschaltung (34) vorgesehen ist, durch die eine Kette von hintereinander geschalteten Zwei-Quadrantenmodulen (14) als Ganzes umgepolt werden kann.

12. Energiespeicher-Direktumrichtersystem (10) nach einem der Ansprüche 5 bis 11, welches drei, vier, fünf oder mehr Brückenzweige (12) enthält, wobei die genannten drei, vier, fünf oder mehr Brückenzweige (12) in einer Sterntopologie miteinander verschaltet sind, oder bei dem die drei, vier, fünf oder mehr Brückenzweige (12) derart in einer Ringtopologie verschaltet sind, dass die mindestens zwei äußeren Anschlüsse (16, 18) eines jeden Brückenzweiges (12) separat mit den mindestens zwei äußeren Anschlüssen (16, 18) des angrenzenden Brückenzweiges (12) verbunden sind,
wobei die mindestens zwei äußeren Anschlüsse (16, 18) im ersten und/oder letzten Modul (14) eines Brückenzweiges (12) separat mit mindestens zwei äußeren Anschlüssen (16, 18) eines Moduls (14) eines angrenzenden Brückenzweiges (12) verbunden sind,
und wobei die Steuereinrichtung (20) dazu eingerichtet ist, zumindest einen Teil der genannten Mehrzahl von Schaltern (28) so anzusteuern, dass mindestens zwei voneinander unabhängige Ringströme durch den Ring aus Brückenzweigen (12) fließen können.

13. Energiespeicher-Direktumrichtersystem (10) nach einem der Ansprüche 5 bis 12, wobei die Steuereinrichtung (20) geeignet ist, Gruppen von Modulen (14) zu bestimmen, deren Speicherelemente (26) parallel zu schalten sind,
wobei die Steuereinrichtung dazu eingerichtet ist, zumindest einen Teil der genannten Mehrzahl von Schaltern (28) in Abhängigkeit von dem aktuellen Ladezustand der Speicherelemente (26) derart anzusteuern, dass vor dem Parallelschalten der Module (14) der Gruppe die Spannungen oder Ladezustände der Module angeglichen werden, indem
- während eines Ladevorgangs Module (14), oder Moduluntergruppen, die eine geringere Spannung bzw. einen geringeren Ladezustand aufweisen, bevorzugt geladen werden, und/oder
- während eines Energieabgabemodus Module (14) oder Moduluntergruppen, die eine hohe Spannung bzw. einen hohen Ladezustand aufweisen, bevorzugt entladen werden.

14. Verfahren zum Bereitstellen einer gewünschten Spannung oder einer Phase einer gewünschten Spannung, das folgendes umfasst:
Empfangen von Informationen bezüglich des aktuellen Ladezustandes von Speicherelementen (26) bzw. der Spannung oder Leistung von Energieumwandlungselementen, die in einer Mehrzahl von hintereinander geschalteten Modulen (14) enthalten sind, wobei jedes der genannten Module (14)
- mindestens zwei erste Anschlüsse (16) und mindestens zwei zweite Anschlüsse (18),
- ein Speicherelement (26) für elektrische Energie, insbesondere eine Batterie, oder ein Energieumwandlungselement, und
- eine Mehrzahl von Schaltern (28) umfasst,
wobei bei jeweils zwei benachbarten Modulen (14) aus den genannten Modulen die ersten Anschlüsse (16) des einen Moduls (14) direkt oder über eine dazwischen geschaltete Komponente mit den zweiten Anschlüssen (18) des anderen Moduls (14) verbunden sind,
Ansteuern zumindest eines Teils der genannten Mehrzahl von Schaltern (28) in Abhängigkeit von dem aktuellen Ladezustand der Speicherelemente (26), bzw. der aktuellen Leistung der Spannung der Energieumwandlungselemente derart, dass ein Brückenzweig (12), der eine Mehrzahl von derartigen hintereinandergeschalteten Modulen (14) umfasst, als Ganzes eine gewünschte Spannung oder eine Phase einer gewünschten Spannung liefert,
wobei mindestens ein Speicherelement (26) bzw. Energieumwandlungselement eines Moduls deaktiviert wird, und
- die Speicherelemente (26) bzw. Energieumwandlungselemente von zwei Modulen (14), die durch mindestens ein dazwischenliegendes Modul (14) mit deaktiviertem Speicherelement/Energieumwandlungselement getrennt sind, parallel oder in Reihe geschaltet werden,
wobei das Verfahren zum Betrieb eines modularen Energiespeicher-Direktumrichtersystems (10) nach einem der Ansprüche 5 bis 13 ausgeführt wird.

15. Verfahren nach Anspruch 14, mit den folgenden Schritten:
Bestimmen von Gruppen von Modulen (14), deren Speicherelemente (26) parallel zu schalten sind, und
Angleichen der Spannungen oder Ladezustände der Module innerhalb der Gruppe, vor dem Parallelschalten der Module (14) der Gruppe, indem
- während eines Ladevorgangs Module (14) oder Moduluntergruppen, die eine geringere Spannung bzw. einen geringeren Ladezustand aufweisen, bevorzugt geladen werden, und/oder
- während eines Energieabgabemodus Module (14) oder Moduluntergruppen, die eine hohe Spannung bzw. einen hohen Ladezustand aufweisen, bevorzugt entladen werden, und/oder bei dem ferner die Kapazität des Speicherelements (26) eines Moduls (14) bestimmt wird, indem das Speicherelement (26) im laufenden Betrieb des Systems (10) vollständig geladen und vollständig entladen wird und die Energie, welche in oder aus dem Speicherelement (26) fließt, erfasst wird, und/oder
bei dem fehlerhafte Module (14) identifiziert werden, indem eines oder mehrere der folgenden Kriterien überprüft werden:
- Ist das Speicherelement defekt?
- Ist das Speicherelement kurzgeschlossen oder offen?
- Ist ein Bypassmodus möglich?
- Welche Schaltzustände sind noch möglich?
